# EUROPEAN PATENT SPECIFICATION

(11) **EP 4 631 837 B1**
(45) Date of publication and mention of the grant of the patent: **19.08.2026**
(21) Application number: 24207513.3
(22) Date of filing: 18.10.2024
(51) Int. Cl.: B62K 5/10, B62K 5/08

(54) **LEANING VEHICLE**
NEIGEFAHRZEUG
VÉHICULE INCLINABLE

(30) Priority: 10.04.2024 JP 2024063330
(43) Date of publication of application: 15.10.2025
(73) Proprietor: Yamaha Hatsudoki Kabushiki Kaisha, Iwata-shi, Shizuoka 438-8501 (JP)
(72) Inventor: Ogino, Takuya, Iwata-shi, Shizuoka, 438-8501 (JP); Meguro, Yuji, Iwata-shi, Shizuoka, 438-8501 (JP)
(74) Representative: Grünecker Patent- und Rechtsanwälte PartG mbB

(56) References cited:
- EP-A1- 4 159 606
- EP-A2- 3 069 979
- US-B2- 10 625 771

## Description

The present invention relates to a lean vehicle having a vehicle body frame that tilts when turning left and when turning right and having a head pipe, a rear wheel, a power unit that includes a driving power source supported on the vehicle body frame configured to drive the rear wheel, an electronic control unit as a controller configured to control the driving power source supported on the vehicle body frame, a headlight, a light control unit configured to control the headlight, a left front wheel arranged leftward relative to the head pipe in a vehicle body left-right direction, a right front wheel arranged rightward relative to the head pipe in the vehicle body left-right direction, a steering shaft rotatably supported on the head pipe, a link mechanism that links together the vehicle body frame, the left front wheel, and the right front wheel so that the vehicle body frame, the left front wheel, and the right front wheel can be tilted relative to a ground on which the lean vehicle is placed, and also links together the steering shaft, the left front wheel, and the right front wheel so that the left front wheel and the right front wheel can rotate left and right together with the steering shaft in the vehicle body left-right direction and a vehicle part. The link mechanism includes an upper arm, a lower arm, and a tie rod that extend leftward and rightward in the vehicle body left-right direction and are supported on the vehicle body frame so that the upper arm, the lower arm, and the tie rod can rotate about a first axis, a second axis, and a third axis, respectively, extending in a vehicle body front-rear direction. The upper arm is arranged forward in the vehicle body front-rear direction relative to the head pipe. The lower arm is arranged forward in the vehicle body front-rear direction and downward in a vehicle body up-down direction relative to the upper arm. The tie rod is arranged forward in the vehicle body front-rear direction and downward in the vehicle body up-down direction relative to the lower arm. The upper arm can rotate between a first left-tilted position extending upward in the vehicle body up-down direction and leftward in the vehicle body left-right direction and a first right-tilted position extending upward in the vehicle body up-down direction and rightward in the vehicle body left-right direction. The lower arm can rotate between a second left-tilted position extending upward in the vehicle body up-down direction and leftward in the vehicle body left-right direction and a second right-tilted position extending upward in the vehicle body up-down direction and rightward in the vehicle body left-right direction. The tie rod can rotate between a third left-tilted position extending upward in the vehicle body up-down direction and leftward in the vehicle body left-right direction and a third right-tilted position extending upward in the vehicle body up-down direction and rightward in the vehicle body left-right direction. Where a first distance refers to a distance, from the first axis, of one of a left end and a right end of the upper arm in the vehicle body left-right direction that is farther away from the first axis. At least a portion of the vehicle part is arranged rearward relative to a front end of the tie rod in the vehicle body front-rear direction, forward relative to a rear end of the upper arm in the vehicle body front-rear direction, rightward relative to a leftmost left end, from among a left end of the upper arm in the vehicle body left-right direction when the upper arm is in the first left-tilted position, a left end of the lower arm in the vehicle body left-right direction when the lower arm is in the second left-tilted position, and a left end of the tie rod in the vehicle body left-right direction when the tie rod is in the third left-tilted position, leftward relative to a rightmost right end, from among a right end of the upper arm in the vehicle body left-right direction when the upper arm is in the first right-tilted position, a right end of the lower arm in the vehicle body left-right direction when the lower arm is in the second right-tilted position, and a right end of the tie rod in the vehicle body left-right direction when the tie rod is in the third right-tilted position, upward in the vehicle body up-down direction relative to the third axis, downward in the vehicle body up-down direction relative to a position that is at the first distance upward from the first axis in the vehicle body up-down direction; and in an area that does not contact the upper arm, the lower arm, and the tie rod when the upper arm, the lower arm, and the tie rod rotate. Such kind of vehicle can be taken from the prior art documents EP 4 159 606 A1, US 10 625 771 B2 or EP 3 069 979 A2. Document EP 4 159 606 A1, which is considered being the closest prior art, shows a lean vehicle with a left front wheel, a right front wheel and a rear wheel, as well as a vehicle body frame that tilts when turning left and when turning right.

Moreover, as described in JP 2023-51631 A, lean vehicles have been known in the art that have a left front wheel and a right front wheel, and a vehicle body frame that tilts when turning left and when turning right. When turning left or when turning right, the rider steers the handle bar to turn the left front wheel and the right front wheel left or right and tilt the vehicle body frame, together with the left front wheel and the right front wheel, relative to the ground.

In recent years, the number of vehicle parts, such as electrical components, to be installed on the vehicle has tended to increase. However, it is undesirable to increase the size of the vehicle in order to provide space for vehicle parts.

An object of the present invention is to provide a lean vehicle in which vehicle parts can be arranged in a compact manner without increasing the size of the vehicle by utilizing the configuration unique to lean vehicles. According to the present invention said object is solved by a lean vehicle having the features of independent claim 1. Preferred embodiments are laid down in the dependent claims.

A lean vehicle disclosed herein includes: a vehicle body frame having a head pipe; a left front wheel arranged leftward relative to the head pipe; a right front wheel arranged rightward relative to the head pipe; a steering shaft rotatably supported on the head pipe; a link mechanism that links together the vehicle body frame, the left front wheel, and the right front wheel so that the vehicle body frame, the left front wheel, and the right front wheel can be tilted relative to the ground, and also links together the steering shaft, the left front wheel, and the right front wheel so that the left front wheel and the right front wheel can rotate left and right together with the steering shaft; and a vehicle part. The link mechanism includes an upper arm, a lower arm, and a tie rod that extend leftward and rightward and are supported on the vehicle body frame so that the upper arm, the lower arm, and the tie rod can rotate about a first axis, a second axis, and a third axis, respectively, extending in a vehicle body front-rear direction. The upper arm is arranged forward in the vehicle body front-rear direction relative to the head pipe. The lower arm is arranged forward in the vehicle body front-rear direction and downward in a vehicle body up-down direction relative to the upper arm. The tie rod is arranged forward in the vehicle body front-rear direction and downward in the vehicle body up-down direction relative to the lower arm. The upper arm can rotate between a first left-tilted position extending upward in the vehicle body up-down direction and leftward in a vehicle body left-right direction and a first right-tilted position extending upward in the vehicle body up-down direction and rightward in the vehicle body left-right direction. The lower arm can rotate between a second left-tilted position extending upward in the vehicle body up-down direction and leftward in the vehicle body left-right direction and a second right-tilted position extending upward in the vehicle body up-down direction and rightward in the vehicle body left-right direction. The tie rod can rotate between a third left-tilted position extending upward in the vehicle body up-down direction and leftward in the vehicle body left-right direction and a third right-tilted position extending upward in the vehicle body up-down direction and rightward in the vehicle body left-right direction. Where a first distance refers to a distance, from the first axis, of one of a left end and a right end of the upper arm in the vehicle body left-right direction that is farther away from the first axis. At least a portion of the vehicle part is arranged rearward relative to a front end of the tie rod in the vehicle body front-rear direction; and forward relative to a rear end of the upper arm in the vehicle body front-rear direction. The at least portion of the vehicle part is arranged rightward relative to a leftmost left end, from among a left end of the upper arm in the vehicle body left-right direction when the upper arm is in the first left-tilted position, a left end of the lower arm in the vehicle body left-right direction when the lower arm is in the second left-tilted position, and a left end of the tie rod in the vehicle body left-right direction when the tie rod is in the third left-tilted position. The at least portion of the vehicle part is arranged leftward relative to a rightmost right end, from among a right end of the upper arm in the vehicle body left-right direction when the upper arm is in the first right-tilted position, a right end of the lower arm in the vehicle body left-right direction when the lower arm is in the second right-tilted position, and a right end of the tie rod in the vehicle body left-right direction when the tie rod is in the third right-tilted position. The at least portion of the vehicle part is arranged upward in the vehicle body up-down direction relative to the third axis; and downward in the vehicle body up-down direction relative to a position that is at the first distance upward from the first axis in the vehicle body up-down direction. The at least portion of the vehicle part is arranged in an area that does not contact the upper arm, the lower arm, and the tie rod when the upper arm, the lower arm, and the tie rod rotate.

With the lean vehicle set forth above, while the vehicle part is arranged in the front part of the lean vehicle, the vehicle part is arranged in an area where the vehicle part does not contact the upper arm, the lower arm, and the tie rod when the upper arm, the lower arm, and the tie rod rotate. With the lean vehicle set forth above, it is possible to make effective use of a particular dead space of the lean vehicle as a space for installing the vehicle part, and the vehicle part can therefore be arranged in a compact manner without increasing the size of the lean vehicle.

A third distance refers to a distance, from the third axis, of one of a left end and a right end of the tie rod in the vehicle body left-right direction that is farther away from the third axis. At least a portion of the vehicle part may be arranged: rearward relative to a front end of the tie rod in the vehicle body front-rear direction; forward relative to a front end of the lower arm in the vehicle body front-rear direction; and in an area that is inside a circle centered on the third axis and having a radius of the third distance, and that is rightward in the vehicle body left-right direction and upward in the vehicle body up-down direction relative to the tie rod being in the third left-tilted position and leftward in the vehicle body left-right direction and upward in the vehicle body up-down direction relative to the tie rod being in the third right-tilted position, as viewed from a front side in the vehicle body front-rear direction.

At least a portion of the vehicle part may be arranged forward relative to a rear end of the tie rod in the vehicle body front-rear direction.

At least a portion of the vehicle part may be arranged rearward relative to a rear end of the tie rod in the vehicle body front-rear direction and forward relative to a front end of the lower arm in the vehicle body front-rear direction.

A second distance refers to a distance, from the second axis, of one of a left end and a right end of the lower arm in the vehicle body left-right direction that is farther away from the second axis. At least a portion of the vehicle part may be arranged: rearward relative to a front end of the lower arm in the vehicle body front-rear direction; forward relative to a front end of the upper arm in the vehicle body front-rear direction; and in an area that is inside a circle centered on the second axis and having a radius of the second distance, and that is rightward in the vehicle body left-right direction and upward in the vehicle body up-down direction relative to the lower arm being in the second left-tilted position and leftward in the vehicle body left-right direction and upward in the vehicle body up-down direction relative to the lower arm being in the second right-tilted position, as viewed from a front side in the vehicle body front-rear direction.

At least a portion of the vehicle part may be arranged forward relative to a rear end of the lower arm in the vehicle body front-rear direction.

At least a portion of the vehicle part may be arranged rearward relative to a rear end of the lower arm in the vehicle body front-rear direction and forward relative to a front end of the upper arm in the vehicle body front-rear direction.

At least a portion of the vehicle part may be arranged: rearward relative to a front end of the upper arm in the vehicle body front-rear direction; forward relative to a rear end of the upper arm in the vehicle body front-rear direction; and in an area that is inside a circle centered on the first axis and having a radius of the first distance, and that is rightward in the vehicle body left-right direction and upward in the vehicle body up-down direction relative to the upper arm being in the first left-tilted position and leftward in the vehicle body left-right direction and upward in the vehicle body up-down direction relative to the upper arm being in the first right-tilted position, as viewed from a front side in the vehicle body front-rear direction.

The lean vehicle may include a brake hose supported on the tie rod via a bracket. At least a portion of the vehicle part may be arranged: rearward relative to a front end of the tie rod in the vehicle body front-rear direction; forward relative to the rear end of the lower arm in the vehicle body front-rear direction; and in an area that is rightward in the vehicle body left-right direction and upward in the vehicle body up-down direction relative to the brake hose when the tie rod is in the third left-tilted position and leftward in the vehicle body left-right direction and upward in the vehicle body up-down direction relative to the brake hose when the tie rod is in the third right-tilted position, as viewed from a front side in the vehicle body front-rear direction. Thus, while the vehicle part is arranged in the vicinity of the brake hose, the contact between the vehicle part and the brake hose is suppressed.

The lean vehicle may include a lean lock device that locks rotation of the upper arm, the lower arm or the tie rod. At least a portion of the lean lock device may be arranged: rearward relative to a front end of the lower arm in the vehicle body front-rear direction; forward relative to a rear end of the upper arm in the vehicle body front-rear direction; and rightward in the vehicle body left-right direction and upward in the vehicle body up-down direction relative to the upper arm being in the first left-tilted position and leftward in the vehicle body left-right direction and upward in the vehicle body up-down direction relative to the upper arm being in the first right-tilted position, as viewed from the front side in the vehicle body front-rear direction. The vehicle part may be arranged downward relative to the lean lock device in the vehicle body up-down direction.

The vehicle part is an ECU.

The lean vehicle may include a driving power source supported on the vehicle body frame. The ECU may be a controller that controls the driving power source.

The ECU may be a light control unit that controls a headlight.

According to a not claimed embodiment, the vehicle part may be a communication device.

According to a not claimed embodiment, the vehicle part may be a charging port to which a power feed cord is removably connected.

The lean vehicle may include a support frame that supports the lean lock device on the vehicle body frame. The vehicle part may be supported on the support frame.

The support frame may include a left frame that is arranged leftward of the lean lock device in the vehicle body left-right direction and that extends downward in the vehicle body up-down direction and rightward in the vehicle body left-right direction, and a right frame that is arranged rightward of the lean lock device in the vehicle body left-right direction and that extends downward in the vehicle body up-down direction and leftward in the vehicle body left-right direction. The vehicle part may be attached to a lower end portion of the left frame and a lower end portion of the right frame.

### EFFECTS OF INVENTION

According to the present invention, it is possible to arrange vehicle parts in a compact manner without increasing the size of the vehicle by utilizing the configuration unique to lean vehicles.

### BRIEF DESCRIPTION OF DRAWINGS

FIG. 1 is a left side view of a lean vehicle.
FIG. 2 is a front view of the front portion of the lean vehicle.
FIG. 3 is a left side view of the front portion of the lean vehicle.
FIG. 4 is a plan view of the front portion of the lean vehicle.
FIG. 5 is a plan view of the front portion of the lean vehicle when steered.
FIG. 6 is a front view of the front portion of the lean vehicle when tilted.
FIG. 7 is a front view of the front portion of the lean vehicle when tilted and steered.
FIG. 8 is a perspective view of the front portion according to one embodiment.
FIG. 9 is a front view of the front portion according to the embodiment.
FIG. 10 is a left side view of the front portion according to the embodiment.
FIG. 11 is a front view of the front portion when the upper arm, the lower arm, and the tie rod are tilted most leftward relative to the vehicle body frame, when the lean vehicle is not being steered.
FIG. 12 is a front view of the front portion when the upper arm, the lower arm, and the tie rod are tilted most rightward relative to the vehicle body frame, when the lean vehicle is not being steered.
FIG. 13 is a view schematically showing the rotation of the upper arm.
FIG. 14 is view schematically showing the area where the upper arm does not pass when the upper arm rotates, the area where the lower arm does not pass when the lower arm rotates, and the area where the tie rod does not pass when the tie rod rotates.
FIG. 15 is a view schematically showing the positional relationship of the upper arm, the lower arm, the tie rod, and vehicle parts in the vehicle body front-rear direction.

### DESCRIPTION OF EMBODIMENTS

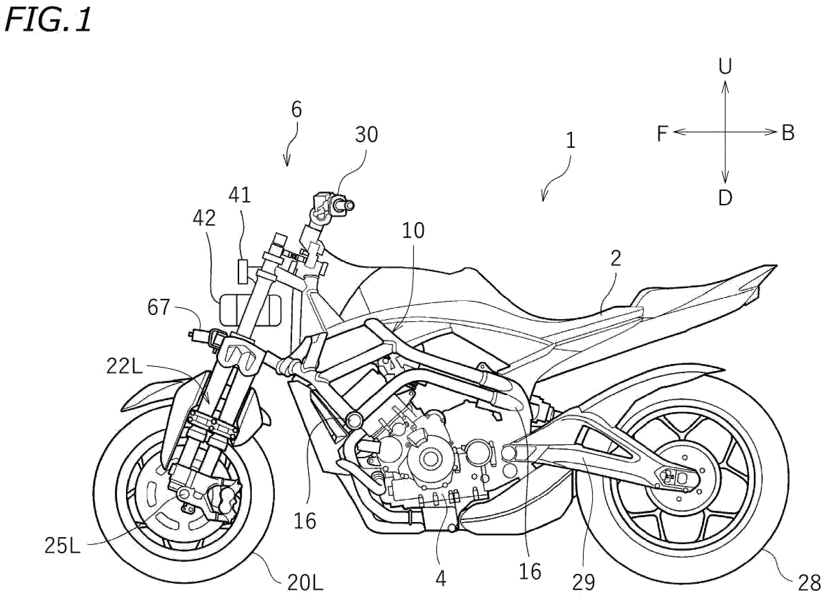

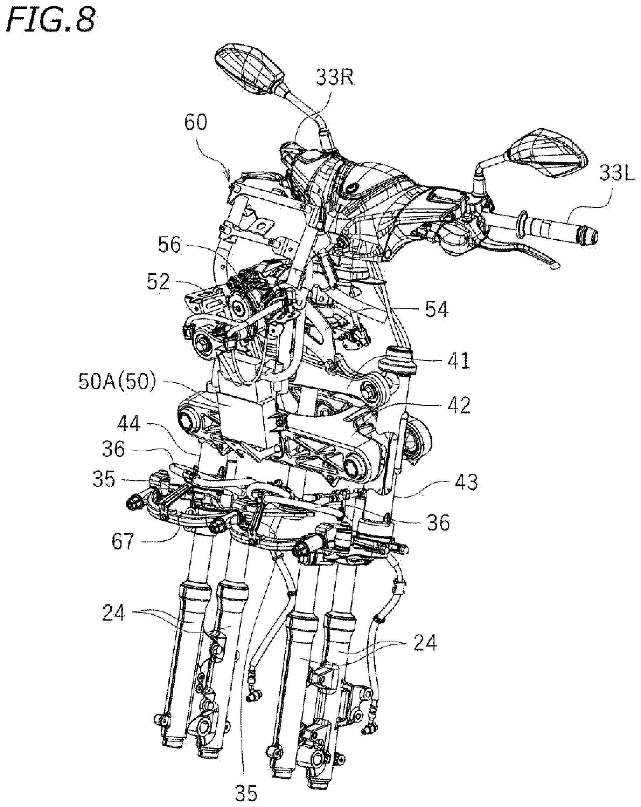

An embodiment of a lean vehicle will now be described with reference to the drawings. FIG. 1 to FIG. 7 are views showing a basic configuration of a lean vehicle 1. As will be described in detail below, the present embodiment is directed to the lean vehicle 1 illustrated in FIG. 1 to FIG. 7, with modifications made to the front portion of the vehicle (see FIG. 8). In the following description, the basic configuration of the lean vehicle 1 will first be described with reference to FIG. 1 to FIG. 7, and the details of the front portion of the lean vehicle 1 according to the present embodiment will then be described with reference to FIG. 8 to FIG. 15.

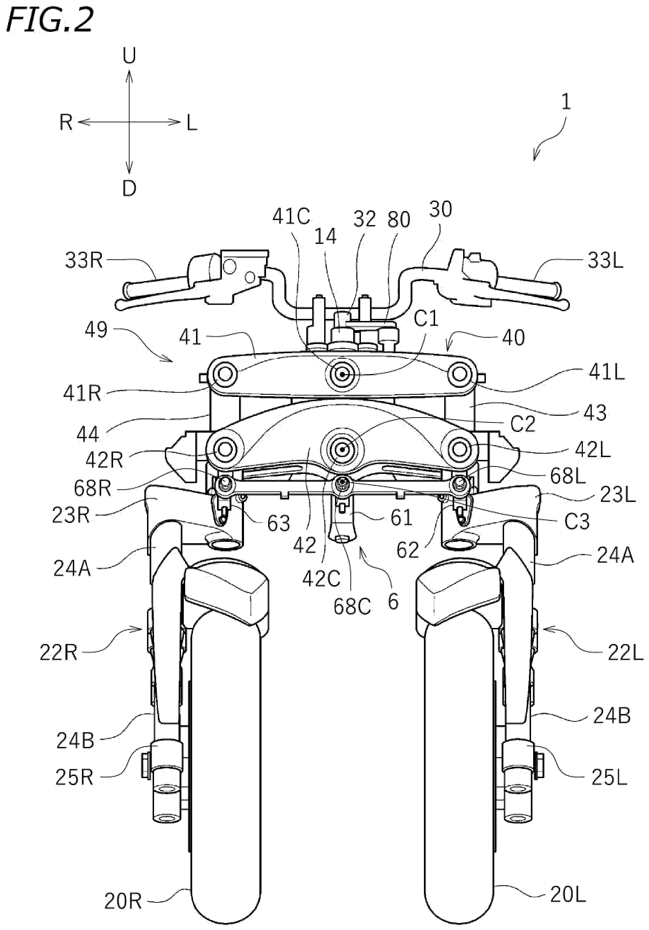

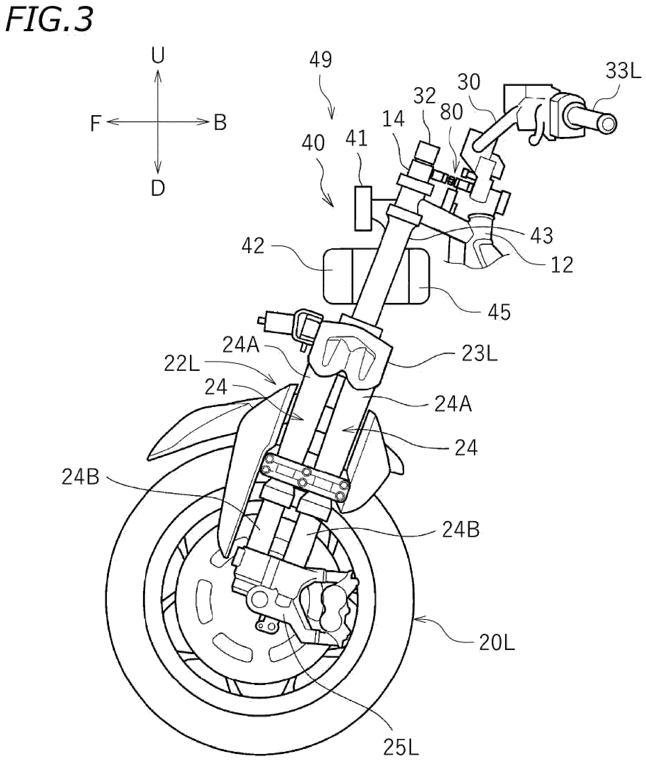

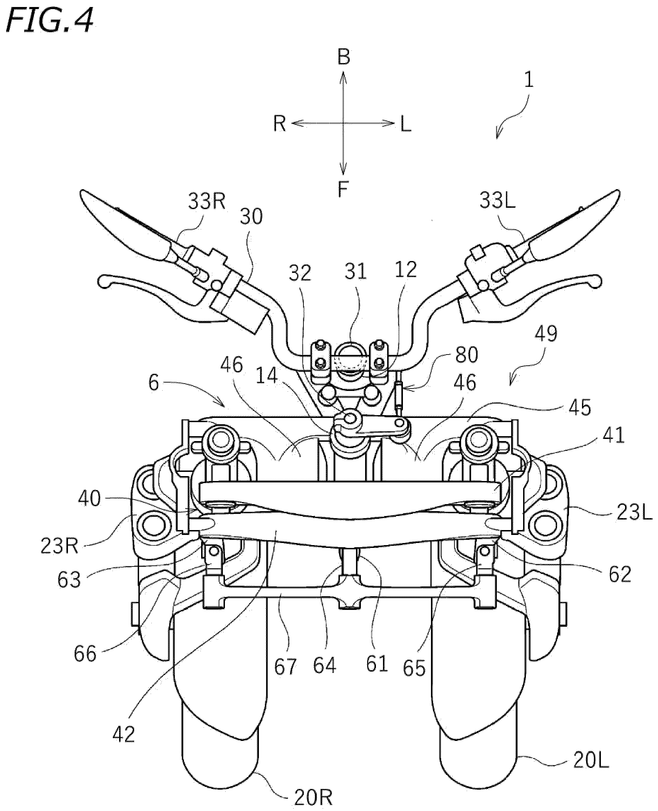

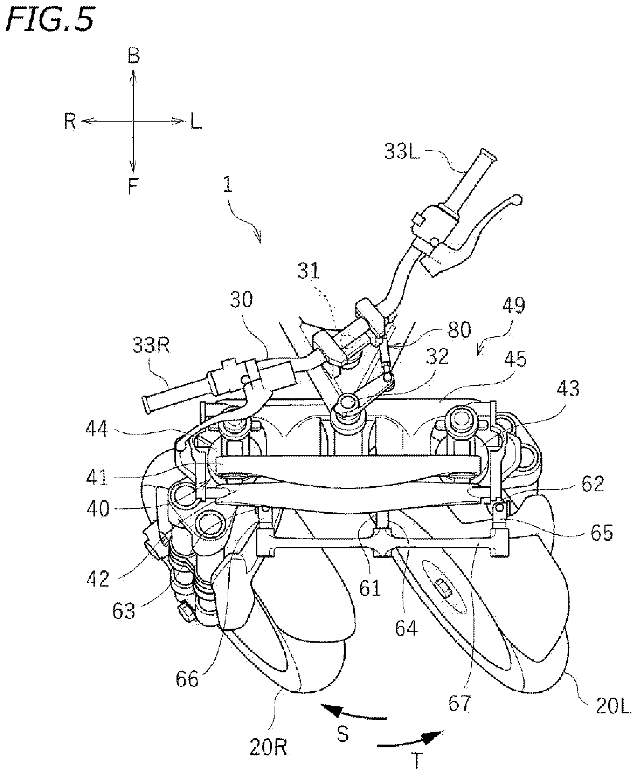

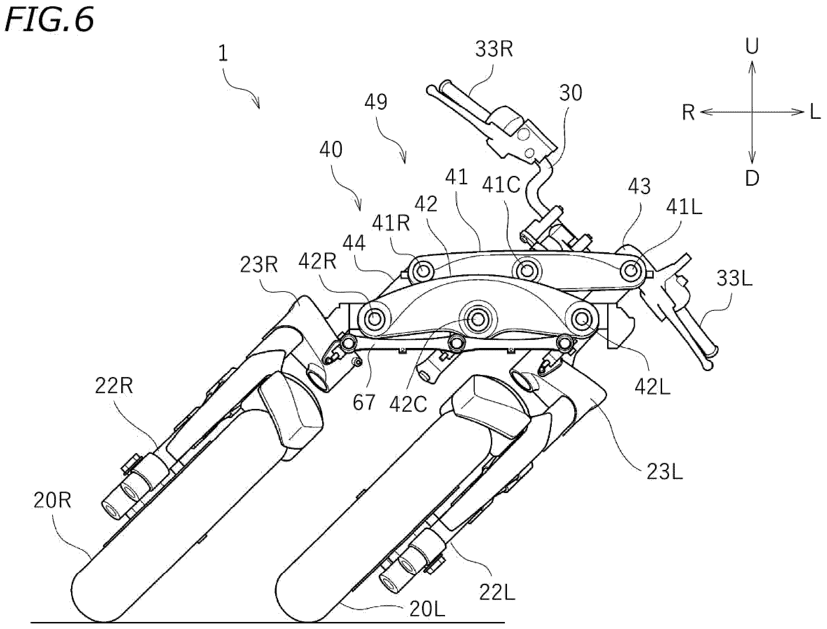

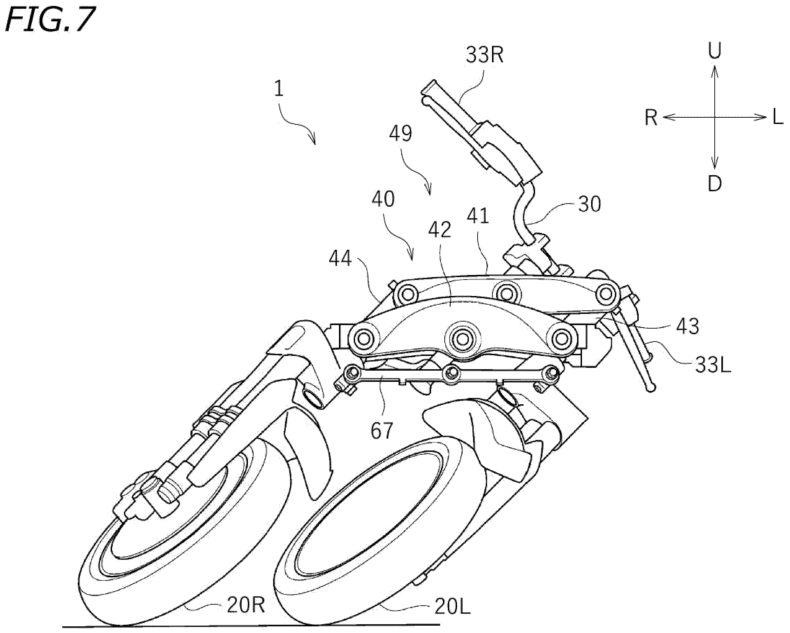

FIG. 1 is a left side view of the lean vehicle 1. FIG. 2 is a front view of the front portion of the lean vehicle 1. FIG. 3 is a left side view of the front portion of the lean vehicle 1. FIG. 4 is a plan view of the front portion of the lean vehicle 1. FIG. 5 is a plan view of the front portion of the lean vehicle 1 when steered. FIG. 6 is a front view of the front portion of the lean vehicle 1 when tilted. FIG. 7 is a front view of the front portion of the lean vehicle 1 when tilted and steered.

The terms front, rear, left, right, up and down, as used in the description below, refer to these directions as viewed from a virtual rider seated on a seat 2 while the leaning vehicle 1 is standing upright on a horizontal surface and not being steered with no rider and no load thereon, unless specified otherwise. Note that standing upright on a horizontal surface refers to a state where a vehicle body frame 10 to be described below is standing upright on a horizontal surface (see FIG. 2). The lean vehicle 1 not being steered means that a steering shaft 31 to be described below is not rotated left or right, and that the center line of a left front wheel 20L and a right front wheel 20R to be described below is parallel to the center line of the lean vehicle 1. The designations F, B, L, R, U and D, as used in the figures, refer to front, rear, left, right, up and down, respectively.

As shown in FIG. 1, the lean vehicle 1 includes the vehicle body frame 10, the seat 2 supported on the vehicle body frame 10, the left front wheel 20L, the right front wheel 20R (see FIG. 2), a rear wheel 28, and a power unit 4. As shown in FIG. 2, the lean vehicle 1 includes a handle bar 30 and a link mechanism 40.

As shown in FIG. 4, the vehicle body frame 10 includes a head pipe 12 and a link pipe 14 arranged forward of the head pipe 12. The head pipe 12 supports the steering shaft 31 fixed to the handle bar 30 so that the steering shaft 31 can rotate left and right. The link pipe 14 supports a steering shaft 32 so that the steering shaft 32 can rotate left and right.

As shown in FIG. 1, the power unit 4 is supported on the vehicle body frame 10. The vehicle body frame 10 includes a power unit support portion 16 that supports the power unit 4. The front end portion of a rear arm 29 is connected to the power unit 4 so that the rear arm 29 can rotate up and down. The rear wheel 28 is attached to the rear end portion of the rear arm 29. The power unit 4 is linked to the rear wheel 28. The power unit 4 includes a power source, which is an internal combustion engine or an electric motor. The power unit 4 drives the rear wheel 28.

As shown in FIG. 4, the left front wheel 20L is arranged leftward relative to the head pipe 12. The right front wheel 20R is arranged rightward relative to the head pipe 12. The left front wheel 20L and the right front wheel 20R can rotate left and right together with the steering shaft 31.

The lean vehicle 1 includes a left shock absorber 22L and a right shock absorber 22R. As shown in FIG. 3, the left shock absorber 22L is a so-called telescopic shock absorber. The left shock absorber 22L includes a pair of, front and rear, telescopic elements 24. Each telescopic element 24 includes an outer tube 24A and an inner tube 24B inserted into the outer tube 24A. As shown in FIG. 2, the right shock absorber 22R is arranged in left-right symmetry with the left shock absorber 22L. The right shock absorber 22R is configured as is the left shock absorber 22L. The right shock absorber 22R also includes a pair of, front and rear, telescopic elements 24.

As shown in FIG. 2, the lean vehicle 1 includes a left bracket 23L, a left bracket 25L, a right bracket 23R, and a right bracket 25R. As shown in FIG. 3, the upper end portion of the telescopic element 24 of the left shock absorber 22L is fixed to the left bracket 23L. The lower end portion of the telescopic element 24 of the left shock absorber 22L is fixed to the left bracket 25L. The left front wheel 20L is supported on the left bracket 25L. As shown in FIG. 2, the upper end portion of the telescopic element 24 of the right shock absorber 22R is fixed to the right bracket 23R. The lower end portion of the telescopic element 24 of the right shock absorber 22R is fixed to the right bracket 25R. The right front wheel 20R is supported on the right bracket 25R.

As shown in FIG. 4, the lean vehicle 1 includes a steering force transmission mechanism 6. The steering force transmission mechanism 6 includes the handle bar 30, the steering shaft 31, and the steering shaft 32 arranged forward relative to the steering shaft 31. The steering shaft 31 is supported on the head pipe 12 so that the steering shaft 31 can rotate left and right. The steering shaft 32 is supported on the link pipe 14 so that the steering shaft 32 can rotate left and right. The handle bar 30 is fixed to the steering shaft 31. A right grip 33R and a left grip 33L are attached to the handle bar 30. The right grip 33R can rotate relative to the handle bar 30, and forms an accelerator grip for the rider to control the power unit 4. The steering shaft 31 and the steering shaft 32 are linked together by a link member 80. The link member 80 links together the steering shaft 31 and the steering shaft 32 so that they can rotate together.

The link mechanism 40 is a link mechanism of a parallel four-section link (or "parallelogram link") type. As shown in FIG. 2, the link mechanism 40 includes an upper arm 41, a lower arm 42, and a rear arm 45 (see FIG. 3) each extending left and right, and includes a left side member 43 and a right side member 44 each extending up and down. The link mechanism 40 is linked to the link pipe 14 so that the link mechanism 40 can rotate left and right. The link mechanism 40 can rotate left and right relative to the steering shaft 32 (see FIG. 5). The link mechanism 40 is configured so as not to rotate together with the steering shaft 32 even when the steering shaft 32 rotates left and right.

The upper arm 41 is linked to the link pipe 14 by a first central link shaft 41C, to the left side member 43 by a first left link shaft 41L, and to the right side member 44 by a first right link shaft 41R. The upper arm 41 is supported on the link pipe 14 so that the upper arm 41 can rotate about the axis C1 of the first central link shaft 41C (hereinafter referred to as the first axis). The first axis C1 extends in the vehicle front-rear direction. The upper arm 41 is supported on each of the left side member 43 and the right side member 44 so that the upper arm 41 can rotate about the axis extending in the vehicle front-rear direction. The upper arm 41 extends leftward and rightward from the first axis C1.

As shown in FIG. 4, the lower arm 42 is arranged forward of the link pipe 14. The rear arm 45 is arranged rearward of the link pipe 14. The lower arm 42 and the rear arm 45 are connected to each other.

As shown in FIG. 2, the lower arm 42 is linked to the link pipe 14 by the second central link shaft 42C, to the left side member 43 by the second left link shaft 42L, and to the right side member 44 by the second right link shaft 42R. The lower arm 42 is supported by the link pipe 14 so that the lower arm 42 can rotate about the axis C2 of the second central link shaft 42C (hereinafter referred to as the second axis). The second axis C2 extends in the vehicle front-rear direction. The lower arm 42 is supported by each of the left side member 43 and the right side member 44 so that the lower arm 42 can rotate about an axis extending in the vehicle front-rear direction. The lower arm 42 extends leftward and rightward from the second axis C2.

The lower portion of the left side member 43 is connected to the left bracket 23L. The left bracket 23L is connected to the left side member 43 so that the left bracket 23L can rotate about an axis extending in the up-down direction. The lower portion of the right side member 44 is connected to the right bracket 23R. The right bracket 23R is connected to the right side member 44 so that the right bracket 23R can rotate about an axis extending in the up-down direction.

As shown in FIG. 2 and FIG. 4, the steering force transmission mechanism 6 includes a middle transmission plate 61, a left transmission plate 62, a right transmission plate 63, a middle joint 64, a left joint 65, a right joint 66, and a tie rod 67.

The middle transmission plate 61 is connected to the lower portion of the steering shaft 32. The middle transmission plate 61 extends forward from the steering shaft 32 (see FIG. 4). The left transmission plate 62 is connected to the left bracket 23L. The right transmission plate 63 is connected to the right bracket 23R.

As shown in FIG. 4, the middle joint 64 is connected to the front portion of the middle transmission plate 61. The middle joint 64 connected to the middle transmission plate 61 so that the middle joint 64 can rotate about an axis extending in the up-down direction. The left joint 65 is connected to the front portion of the left transmission plate 62. The left joint 65 is connected to the left transmission plate 62 so that the left joint 65 can rotate about an axis extending in the up-down direction. The right joint 66 is connected to the front portion of the right transmission plate 63. The right joint 66 is connected to the right transmission plate 63 so that the right joint 66 can rotate about an axis extending in the up-down direction.

As shown in FIG. 2, the tie rod 67 is linked to the middle joint 64 by a third central link shaft 68C, to the left joint 65 by a third left link shaft 68L, and to the right joint 66 by a third right link shaft 68R. The tie rod 67 is supported by the middle joint 64 so that the tie rod 67 can rotate about the axis C3 of the third central link shaft 68C (hereinafter referred to as the third axis). The third axis C3 extends in the vehicle front-rear direction. The tie rod 67 is supported by each of the left joint 65 and the right joint 66 so that the tie rod 67 can rotate about an axis extending in the vehicle front-rear direction. The tie rod 67 extends leftward and rightward from the third axis C3.

Thus, the handle bar 30 is linked to the left front wheel 20L and the right front wheel 20R via the steering force transmission mechanism 6. As shown in FIG. 5, when the rider steers the handle bar 30, the steering shaft 31 rotates left and right. As the steering shaft 31 rotates, the left front wheel 20L and the right front wheel 20R rotate left and right, changing the direction of travel of the left front wheel 20L and the right front wheel 20R, as shown by arrows S and T.

The vehicle body frame 10 is linked to the left front wheel 20L and the right front wheel 20R via the link mechanism 40. As shown in FIG. 6, when the rider tilts the vehicle body frame 10, the left front wheel 20L and right front wheel 20R also tilt.

As shown in FIG. 7, when the rider steers the handle bar 30 and tilts the vehicle body frame 10, the left front wheel 20L and the right front wheel 20R are tilted and the direction of travel is changed.

The steering force transmission mechanism 6 and the link mechanism 40 together form a link mechanism 49. The link mechanism 49 links together the vehicle body frame 10, the left front wheel 20L, and the right front wheel 20R so that the vehicle body 10, the left front wheel 20L, and the right front wheel 20R can be tilted relative to the ground, and also links together the steering shaft 31, the left front wheel 20L, and the right front wheel 20R so that the left front wheel 20L and the right front wheel 20R can rotate left and right together with the steering shaft 31.

The basic configuration of the lean vehicle 1 is as described above. As mentioned above, the lean vehicle 1 according to the present embodiment involves modifications made to the front portion of the basic configuration described above. Next, the front portion of the lean vehicle 1 according to the present embodiment will be described. Note that in the following description, like elements to those of the basic configuration described above will be denoted by like reference signs and will not be described below in detail.

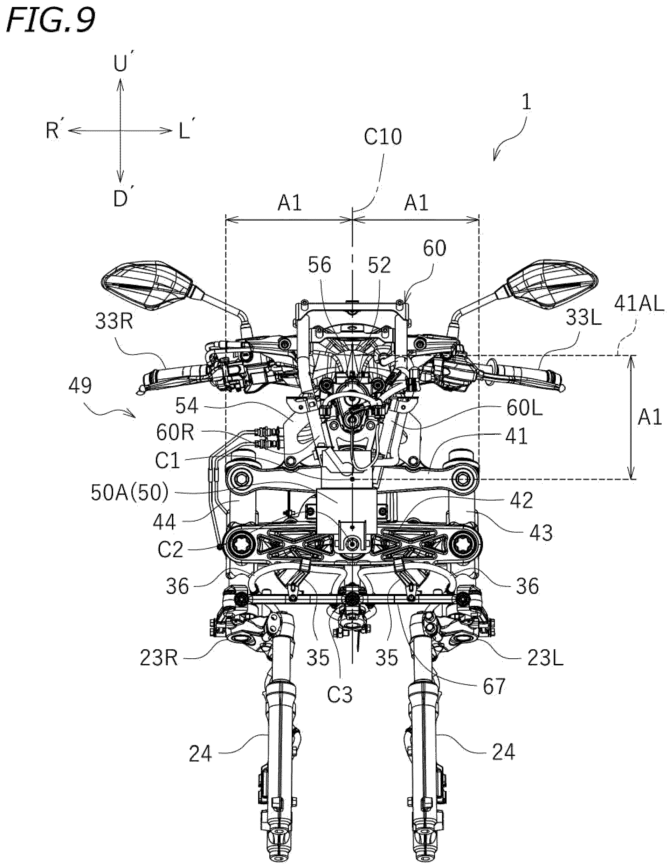

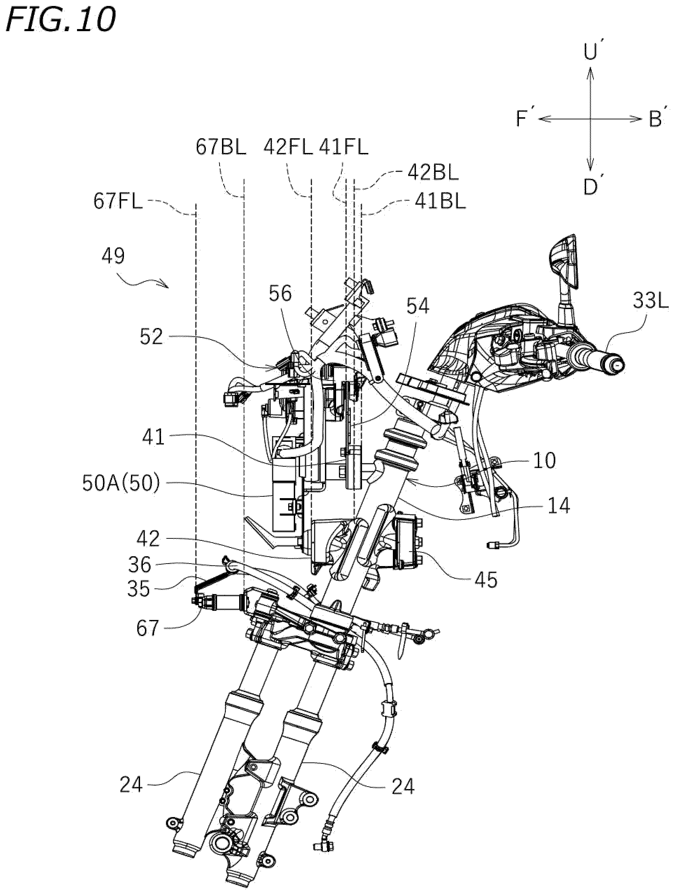

FIG. 8 is a perspective view of the front portion according to the present embodiment. FIG. 9 and FIG. 10 are a front view and a left side view, respectively, of the front portion according to the present embodiment. FIG. 8 to FIG. 10 show the front portion when the lean vehicle 1 is standing upright and is not steered. In the following description, the straight line connecting the first axis C1, the second axis C2, and the third axis C3 as the vehicle is viewed from the front side when the lean vehicle 1 is not steered (see FIG. 9) will be referred to as the vehicle center line C10. Here, the vehicle center line C10 coincides with the center line of the head pipe 12 as the vehicle is viewed from the front side. When the vehicle body frame 10 is tilted, the vehicle center line C10 will be tilted from the vertical line.

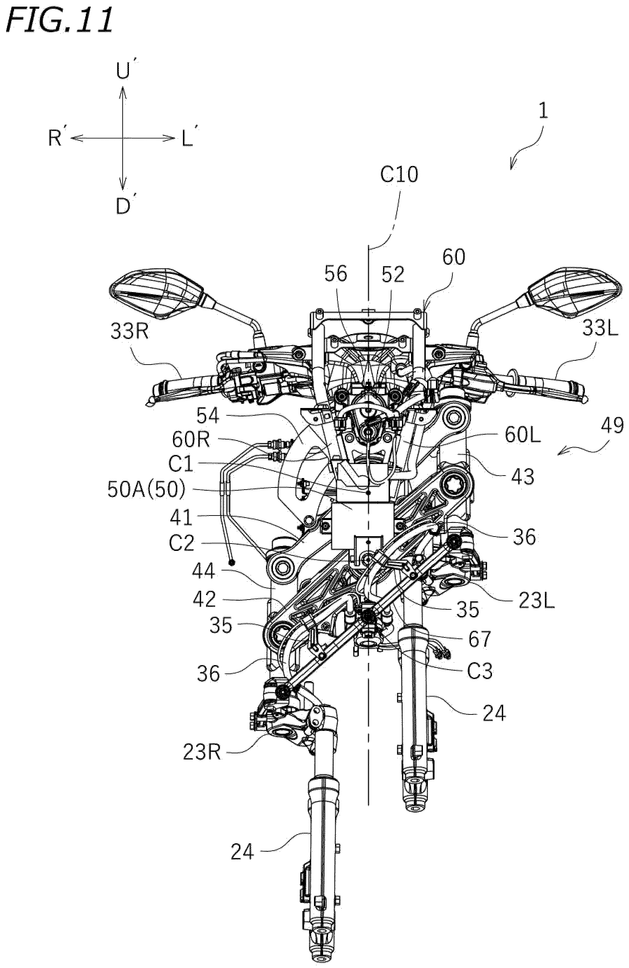

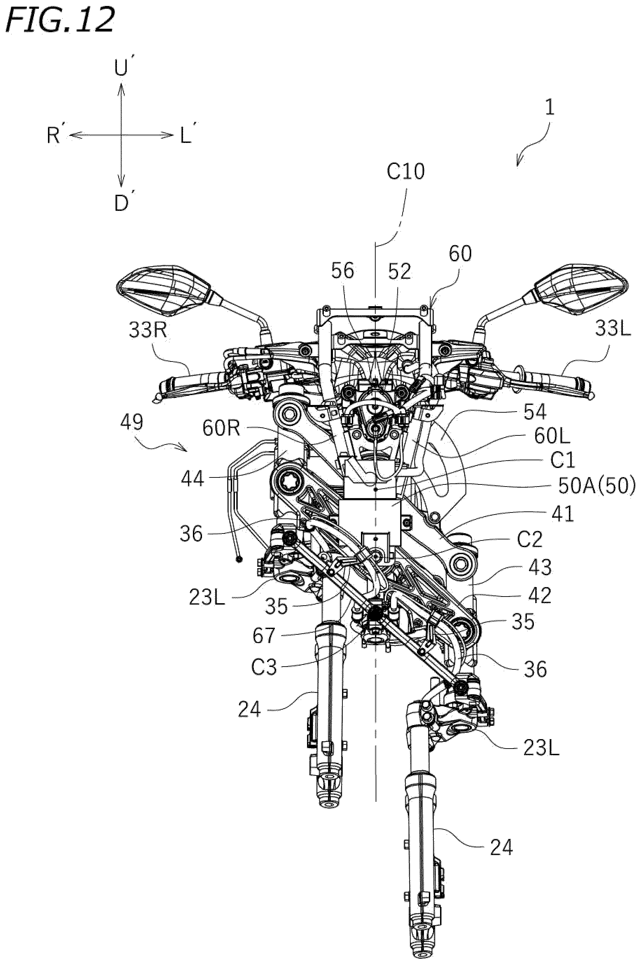

When the lean vehicle 1 tilts, the upper arm 41, the lower arm 42, and the tie rod 67 tilt relative to the vehicle body frame 10 (see FIG. 6). FIG. 11 is a front view of the front portion of the lean vehicle 1 when the upper arm 41, the lower arm 42, and the tie rod 67 are tilted most leftward relative to the vehicle body frame 10 while the lean vehicle 1 is not steered. FIG. 12 is a front view of the front portion of the lean vehicle 1 when the upper arm 41, the lower arm 42, and the tie rod 67 are tilted most rightward relative to the vehicle body frame 10 while the lean vehicle 1 is not steered.

When the lean vehicle 1 turns left or turns right, the vehicle center line C10 tilts relative to the ground, and FIG. 11 and FIG. 12 illustrate the front portion so that the vehicle center line C10 extends in the up-down direction of the drawing sheet. In the following description, upward and downward in the vehicle body up-down direction refer to upward and downward, respectively, along the vehicle center line C10 as the vehicle is viewed from the front side while the lean vehicle 1 is not steered. Leftward and rightward in the vehicle body left-right direction refer to leftward and rightward along the vertical line relative to the vehicle center line C10 as the vehicle is viewed from the front side while the lean vehicle 1 is not steered. Reference signs U', D', L' and R' in the drawings refer to upward in the vehicle body up-down direction, downward in the vehicle body up-down direction, leftward in the vehicle body left-right direction, and rightward in the vehicle body left-right direction, respectively. Reference signs F' and B' in the drawings refer to forward and backward, respectively, in the vehicle body front-rear direction. Note that the vehicle body front-rear direction is identical to the vehicle front-rear direction. Forward F' and backward B' in the vehicle body front-rear direction coincide with the forward F and backward B in the vehicle front-rear direction, respectively.

The upper arm 41 is configured to be rotatable about the first axis C1, and the upper arm 41 can rotate relative to the vehicle body frame 10 between a predetermined first left-tilted position and a predetermined first right-tilted position. FIG. 11 shows the upper arm 41 in the first left-tilted position. The first left-tilted position is the position where the upper arm 41 extends upward in the vehicle body up-down direction and leftward in the vehicle body left-right direction. FIG. 12 shows the upper arm 41 in the first right-tilted position. The first right-tilted position is the position where the upper arm 41 extends upward in the vehicle body up-down direction and rightward in the vehicle body left-right direction.

The lower arm 42 is configured to be rotatable about the second axis C2, and the lower arm 42 can rotate relative to the vehicle body frame 10 between a predetermined second left-tilted position and a predetermined second right-tilted position. FIG. 11 shows the lower arm 42 in the second left-tilted position. The second left-tilted position is the position where the lower arm 42 extends upward in the vehicle body up-down direction and leftward in the vehicle body left-right direction. FIG. 12 shows the lower arm 42 in the second right-tilted position. The second right-tilted position is the position where the lower arm 42 extends upward in the vehicle body up-down direction and rightward in the vehicle body left-right direction.

The tie rod 67 is configured to be rotatable about the third axis C3, and the tie rod 67 can rotate relative to the vehicle body frame 10 between a predetermined third left-tilted position and a predetermined third right-tilted position. FIG. 11 shows the tie rod 67 in the third left-tilted position. The third left-tilted position is the position where the tie rod 67 extends upward in the vehicle body up-down direction and leftward in the vehicle body left-right direction. FIG. 12 shows the tie rod 67 in the third right-tilted position. The third right-tilted position is the position where the tie rod 67 extends upward in the vehicle body up-down direction and rightward in the vehicle body left-right direction.

The lean vehicle 1 includes a front portion having a link mechanism 49. The front portion includes the upper arm 41, the lower arm 42, and the tie rod 67 that rotate while the lean vehicle 1 is running. Conventionally, the trend has been not to arrange a vehicle part in the front portion. However, as long as a vehicle part is arranged in a position that does not interfere with the upper arm 41, the lower arm 42, and the tie rod 67, the vehicle part can be arranged in the front portion. In view of this, with the lean vehicle 1 according to the present embodiment, at least a portion of the vehicle part is arranged rearward relative to the front end of the tie rod 67 in the vehicle body front-rear direction and forward of the rear end of the upper arm 41 in the vehicle body front-rear direction. Moreover, at least a portion of the vehicle part is arranged rightward relative to the leftmost left end, from among the left end of the upper arm 41 in the vehicle body left-right direction when the upper arm 41 is in the first left-tilted position, the left end of the lower arm 42 in the vehicle body left-right direction when the lower arm 42 is in the second left-tilted position, and the left end of the tie rod 67 in the vehicle body left-right direction when the tie rod 67 is in the third left-tilted position. Moreover, at least a portion of the vehicle part is arranged leftward relative to the rightmost right end, from among the right end of the upper arm 41 in the vehicle body left-right direction when the upper arm 41 is in the first right-tilted position, the right end of the lower arm 42 in the vehicle body left-right direction when the lower arm 42 is in the second right-tilted position, and the right end of the tie rod 67 in the vehicle body left-right direction when the tie rod 67 is in the third right-tilted position. The at least portion of the vehicle part is arranged upward in the vehicle body up-down direction relative to the third axis C3 and downward in the vehicle body up-down direction relative to a position that is at the first distance A1 (note that the first distance A1 will be described later) upward in vehicle body up-down direction from the first axis C1. Then, the at least portion of the vehicle part is arranged in an area that does not contact the upper arm 41, the lower arm 42, and the tie rod 67 when the upper arm 41, the lower arm 42, and the tie rod 67 rotate.

The lean vehicle 1 includes an ECU (Electronic Control Unit) 50A as a vehicle part 50. The ECU 50A is, for example, a controller that controls the power unit 4, which is the driving power source. The lean vehicle 1 includes a headlight (not shown) arranged forward relative to the head pipe 12, and an ECU 50A may be a controller that controls the headlight, i.e., an LCU (Light Control Unit). The ECU 50A may not be a controller that controls a brake device (not shown), i.e., a BCU (Brake Control Unit).

The lean vehicle 1 also includes a lean lock device 52 that locks the rotation of the upper arm 41, the lower arm 42, or the tie rod 67. The lean lock device 52 includes a rotating plate 54 that rotates together with the upper arm 41, the lower arm 42, and the tie rod 67, and a caliper 56 that clamps the rotating plate 54 from the front and rear. The rotating plate 54 is configured to be rotatable about an axis extending in the vehicle front-rear direction. In the present embodiment, the rotating plate 54 is attached to the upper arm 41. The rotating plate 54 rotates about the first axis C1. The caliper 56 is attached to the vehicle body frame 10. When the caliper 56 clamps the rotating plate 54, the rotation of the rotating plate 54 is restricted. As a result, the rotation of the upper arm 41, the lower arm 42, and the tie rod 67 relative to the vehicle body frame 10 is regulated. If the caliper 56 clamps the rotating plate 54 when the vehicle body frame 10 is standing upright, the vehicle body frame 10 remains standing upright as the lean of the vehicle body frame 10 is regulated. In this way, the lean lock device 52 can lock the rotation of the upper arm 41, the lower arm 42, and the tie rod 67 so that the vehicle body frame 10 is prevented from tilting as the passenger seated in the seat 2 only lightly supports the vehicle body.

As shown in FIG. 9, the lean vehicle 1 includes a support frame 60 that supports the lean lock device 52 on the vehicle body frame 10. The support frame 60 includes a left frame 60L arranged leftward of the lean lock device 52 and a right frame 60R arranged rightward of the lean lock device 52. The left frame 60L extends downward and rightward, and the right frame 60R extends downward and leftward. The left frame 60L and the right frame 60R are formed in a V-letter shape as viewed from the front side in the vehicle body front-rear direction. The ECU 50A is attached to the lower end portion of the left frame 60L and the lower end portion of the right frame 60R. The ECU 50A is supported by the support frame 60.

A bracket 35 is fixed to the tie rod 67. A brake hose 36 is supported on the bracket 35. The brake hose 36 is supported on the tie rod 67 via the bracket 35. Although not shown in the figures, a left brake device is attached to the left front wheel 20L, and a right brake device is attached to the right front wheel 20R. The brake hose 36 connected to the left brake device is supported on the bracket 35, which is fixed to a portion of the tie rod 67 that is leftward relative to the third axis C3. The brake hose 36 connected to the right brake device is supported on the bracket 35, which is fixed to a portion of the tie rod 67 that is rightward relative to the third axis C3. Since the brake hose 36 is supported on the tie rod 67, the brake hose 36 is configured to rotate together with the tie rod 67.

Referring to FIG. 9, the first distance A1 refers to the distance, from the first axis C1, of one of the left end and the right end of the upper arm 41 that is farther from the first axis C1. Here, the distance from the first axis C1 to the left end of the upper arm 41 and the distance from the first axis C1 to the right end of the upper arm 41 are equal to each other, both being the first distance A1. The broken line 41AL in FIG. 9 is a straight line extending in the vehicle body left-right direction passing through a position that is at the first distance A1 upward from the first axis C1. The ECU 50A and the lean lock device 52 are arranged upward relative to the third axis C3 and downward relative to the position that is at the first distance A1 upward from the first axis C1.

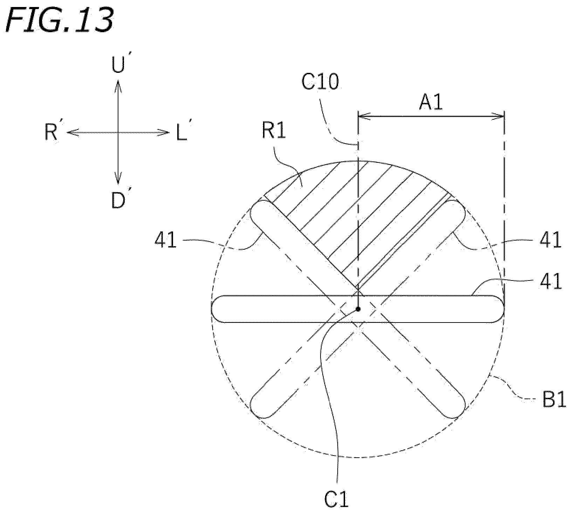

As mentioned above, the upper arm 41 can rotate about the first axis C1 between the first left-tilted position and the first right-tilted position. FIG. 13 is a view schematically showing the rotation of the upper arm 41. The circle B1 in FIG. 13 is a circle centered on the first axis C1 and having a radius of the first distance A1. The upper arm 41 moves within a partial area of the circle B1 while rotating about the first axis C1. The virtual lines in FIG. 13 represent the first left-tilted position and the first right-tilted position of the upper arm 41. The hatched area R1 is, as viewed from the front side in the vehicle body front-rear direction, an area that is upward in the vehicle body up-down direction relative to the first axis C1, rightward in the vehicle body left-right direction and upward in the vehicle body up-down direction relative to the upper arm 41 being in the first left-tilted position, and leftward in the vehicle body left-right direction and upward in the vehicle body up-down direction relative to the upper arm 41 being in the first right-tilted position. This area R1 is an area that is upward relative to the first axis C1, obtained by excluding an area where the upper arm 41 can move from the circle centered on the first axis C1 and having a radius of the first distance A1. This area R1 is an area that does not contact the upper arm 41 even when the upper arm 41 rotates. If a vehicle part is arranged in the area R1, the vehicle part does not contact the upper arm 41 even when the upper arm 41 rotates.

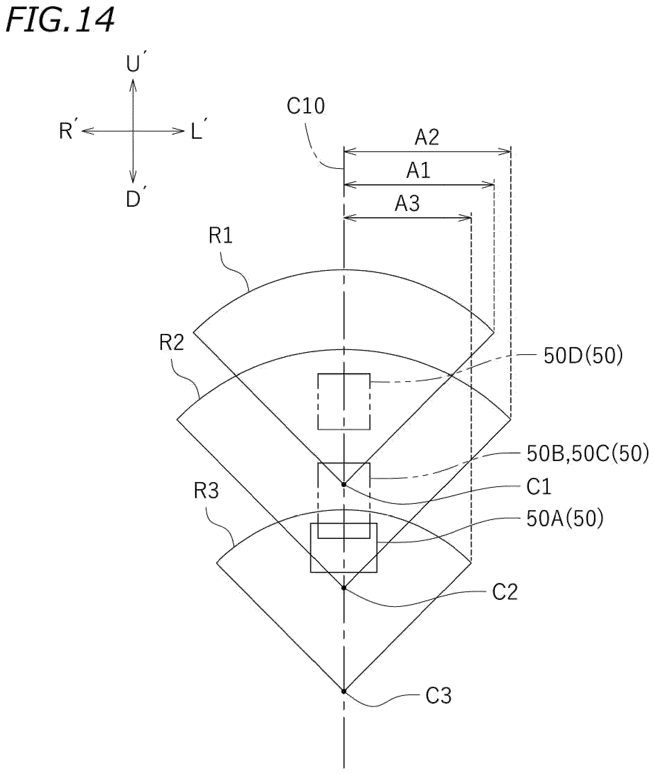

Similarly, the area R2 (see FIG. 14) is, as viewed from the front side in the vehicle body front-rear direction, an area that is upward in the vehicle body up-down direction relative to the second axis C2, rightward in the vehicle body left-right direction and upward in the vehicle body up-down direction relative to the lower arm 42 being in the second left-tilted position, and leftward in the vehicle body left-right direction and upward in the vehicle body up-down direction relative to the lower arm 42 being in the second right-tilted position, and is an area that does not contact the lower arm 42 even when the lower arm 42 rotates. If a vehicle part is arranged in the area R2, the vehicle part does not contact the lower arm 42 even when the lower arm 42 rotates.

The area R3 (see FIG. 14) is, as viewed from the front side in the vehicle body front-rear direction, an area that is upward in the vehicle body up-down direction relative to the third axis C3, rightward in the vehicle body left-right direction and upward in the vehicle body up-down direction relative to the tie rod 67 being in the third left-tilted position, and leftward in the vehicle body left-right direction and upward in the vehicle body up-down direction relative to the tie rod 67 being in the third right-tilted position, and is an area that does not contact the tie rod 67 even when the tie rod 67 rotates. If a vehicle part is arranged in the area R3, the vehicle part does not contact the tie rod 67 even when the tie rod 67 rotates.

The broken straight lines 67FL and 67BL in FIG. 10 are straight lines extending in the vehicle body up-down direction and passing through the front end and the rear end of the tie rod 67, respectively. The broken straight lines 42FL and 42BL are straight lines extending in the vehicle body up-down direction and passing through the front end and the rear end of the lower arm 42, respectively. The broken straight lines 41FL and 41BL are straight lines extending in the vehicle body up-down direction and passing through the front end and the rear end of the upper arm 41, respectively. An area of the front portion that is rearward relative to the rear end of the tie rod 67 and forward relative to the front end of the lower arm 42 and an area of the front portion that is rearward relative to the rear end of the lower arm 42 and forward relative to the front end of the upper arm 41 are areas that do not contact the upper arm 41, the lower arm 42, and the tie rod 67 when the upper arm 41, the lower arm 42, and the tie rod 67 rotate. Note however that since the rear end of the lower arm 42 is located rearward relative to the front end of the upper arm 41 in the present embodiment, there is no area that is rearward relative to the rear end of the lower arm 42 and forward relative to the front end of the upper arm 41.

If a vehicle part is arranged in an area of the front portion that does not contact the upper arm 41, the lower arm 42, and the tie rod 67 when the upper arm 41, the lower arm 42, and the tie rod 67 rotate, the vehicle part can be arranged in the front portion without interfering with the upper arm 41, the lower arm 42, and the tie rod 67. In the present embodiment, the ECU 50A, which is the vehicle part 50, is arranged in an area that does not contact the upper arm 41, the lower arm 42, and the tie rod 67 when the upper arm 41, the lower arm 42, and the tie rod 67 rotate.

As shown in FIG. 10, at least a portion of the ECU 50A is arranged rearward in the vehicle body front-rear direction relative to the rear end of the tie rod 67 and forward in the vehicle body front-rear direction relative to the front end of the upper arm 41. Here, the entirety of the ECU 50A is arranged rearward in the vehicle body front-rear direction relative to the rear end of the tie rod 67 and forward in the vehicle body front-rear direction relative to the front end of the upper arm 41.

As shown in FIG. 11 and FIG. 12, at least a portion of the ECU 50A is arranged rightward in the vehicle body left-right direction and upward in the vehicle body up-down direction relative to the lower arm 42 being in the second left-tilted position, and leftward in the vehicle body left-right direction and upward in the vehicle body up-down direction relative to the lower arm 42 being in the second right-tilted position, as viewed from the front side in the vehicle body front-rear direction. The entirety of the ECU 50A is arranged upward in the vehicle body up-down direction relative to the third axis C3, rightward in the vehicle body left-right direction and upward in the vehicle body up-down direction relative to the tie rod 67 being in the third left-tilted position, and leftward in the vehicle body left-right direction and upward in the vehicle body up-down direction relative to the tie rod 67 being in the third right-tilted position, as viewed from the front side in the vehicle body front-rear direction.

As schematically shown in FIG. 14, at least a portion of the ECU 50A is arranged in the area R3. Here, the entirety of the ECU 50A is arranged in the area R3. At least a portion of the ECU 50A is arranged in the area R2.

As shown in FIG. 10, the lean lock device 52 is arranged rearward in the vehicle front-rear direction relative to the rear end of the tie rod 67 and forward in the vehicle front-rear direction relative to the rear end of the upper arm 41. A portion of the lean lock device 52 is arranged rearward relative to the rear end of the tie rod 67 and forward relative to the front end of the lower arm 42. Another portion of the lean lock device 52 is arranged rearward relative to the front end of the lower arm 42 and forward relative to the rear end of the upper arm 41.

As shown in FIG. 11 and FIG. 12, the lean lock device 52 is arranged rightward in the vehicle body left-right direction and upward in the vehicle body up-down direction relative to the lower arm 42 being in the second left-tilted position, and leftward in the vehicle body left-right direction and upward in the vehicle body up-down direction relative to the lower arm 42 being in the second right-tilted position. At least a portion of the lean lock device 52 is arranged rightward in the vehicle body left-right direction and upward in the vehicle body up-down direction relative to the upper arm 41 being in the first left-tilted position, and leftward in the vehicle body left-right direction and upward in the vehicle body up-down direction relative to the upper arm 41 being in the first right-tilted position.

As described above, with the lean vehicle 1 according to the present embodiment, while the ECU 50A is arranged in the front portion, the ECU 50A is arranged in an area where the ECU 50A does not contact the upper arm 41, the lower arm 42, and the tie rod 67 when the upper arm 41, the lower arm 42, and the tie rod 67 rotate. According to the present embodiment, it is possible to make effective use of a particular dead space of the lean vehicle 1 as a space for installing the ECU 50A. Thus, the ECU 50A can be arranged in a compact manner without increasing the size of the lean vehicle 1.

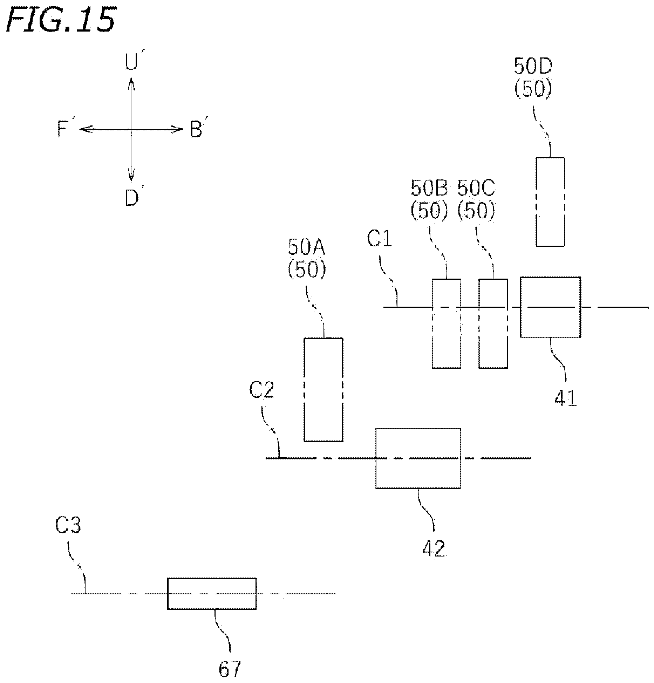

In the present embodiment, at least a portion of the ECU 50A is arranged rearward relative to the rear end of the tie rod 67 in the vehicle body front-rear direction and forward relative to the front end of the lower arm 42 in the vehicle body front-rear direction (see FIG. 15). At least a portion of the ECU 50A is arranged in the area R3 as viewed from the front side in the vehicle body front-rear direction (see FIG. 14). The arrangement is an example of the position of the ECU 50A. At least a portion of the ECU 50A may be arranged in the area R3, and rearward relative to the front end of the tie rod 67 in the vehicle body front-rear direction and forward relative to the rear end of the tie rod 67 in the vehicle body front-rear direction.

As shown in FIG. 15, the lean vehicle 1 may include a vehicle part 50B, and at least a portion of the vehicle part 50B may be arranged rearward relative to the front end of the lower arm 42 in the vehicle body front-rear direction and forward relative to the front end of the upper arm 41 in the vehicle body front-rear direction. At least a portion of the vehicle part 50B may be arranged in the area R2 as viewed from the front side in the vehicle body front-rear direction (see FIG. 14). At least a portion of the vehicle part 50B may be arranged in the area R2, and rearward relative to the front end of the lower arm 42 in the vehicle body front-rear direction and forward relative to the rear end of the lower arm 42 in the vehicle body front-rear direction.

As shown in FIG. 15, the lean vehicle 1 may include a vehicle part 50 C, and at least a portion of the vehicle part 50 C may be arranged rearward relative to the rear end of the lower arm 42 in the vehicle body front-rear direction and forward relative to the front end of the upper arm 41 in the vehicle body front-rear direction.

As shown in FIG. 15, the lean vehicle 1 may include a vehicle part 50D, and at least a portion of the vehicle part 50D may be arranged rearward relative to the front end of the upper arm 41 in the vehicle body front-rear direction and forward relative to the rear end of the upper arm 41 in the vehicle body front-rear direction. At least a portion of the vehicle part 50D may be arranged in the area R1 as viewed from the front side in the vehicle body front-rear direction (see FIG. 14).

As described above, the brake hose 36 is supported on the tie rod 67 via the bracket 35 (see FIG. 9). The brake hose 36 can rotate together with the tie rod 67. At least a portion of the ECU 50A is arranged in an area that is rightward in the vehicle body left-right direction and upward in the vehicle body up-down direction relative to the brake hose 36 when the tie rod 67 is in the third left-tilted position (see FIG. 11) and leftward in the vehicle body left-right direction and upward in the vehicle body up-down direction relative to the brake hose 36 when the tie rod 67 is in the third right-tilted position (see FIG. 12), as viewed from the front side in the vehicle body front-rear direction. Thus, while the ECU 50A is arranged in the vicinity of the brake hose 36, the contact between the ECU 50A and the brake hose 36 is suppressed.

According to the embodiment, the vehicle part 50 arranged in the front portion of the lean vehicle 1 is the ECU 50A. Alternatively, but not claimed, the vehicle part 50 may be a communication device for wireless communication. In a not claimed embodiment, the vehicle part 50 may be a V2X antenna, for example.

In a not claimed embodiment, the vehicle part 50 may be a charging port to which a power feed cord (not shown) is removably connected. The lean vehicle 1 may have a secondary battery (not shown) supported on the vehicle body frame 10, and the charging port may be connected to the secondary battery via a wire. In a not claimed embodiment, the vehicle part 50 may be a sensor for auto cruise control (ACC).

As mentioned above, the left frame 60L and the right frame 60R of the support frame 60 are formed in a V-letter shape as viewed from the front side in the vehicle body front-rear direction (see FIG. 9). The ECU 50A is attached to the lower end portion of the left frame 60L and the lower end portion of the right frame 60R. Thus, by supporting the vehicle part 50 by V-shaped frames (that is, the left frame 60L and the right frame 60R), the vehicle part 50 can be suitably arranged in a V-shaped area R1, R2, or R3 (see FIG. 14).

### DESCRIPTION OF REFERENCE SIGNS

- 1: Lean vehicle
- 4: Power unit (driving power source)
- 10: Vehicle body frame
- 12: Head pipe
- 20L: Left front wheel
- 20R: Right front wheel
- 31: Steering shaft
- 35: Bracket
- 36: Brake hose
- 41: Upper arm
- 42: Lower arm
- 49: Link mechanism
- 50: Vehicle part
- 50A: ECU
- 52: Lean lock device
- 60: Support frame
- 60L: Left frame
- 60R: Right frame
- 67: Tie rod
- C1: First axis
- C2: Second axis
- C3: Third axis

## Claims

1. A lean vehicle (1) comprising:
a vehicle body frame (10) having a head pipe (12);
a rear wheel (28);
a power unit (4) that includes a driving power source supported on the vehicle body frame (10) configured to drive the rear wheel (28);
an electronic control unit (50A) as a controller configured to control the driving power source supported on the vehicle body frame (10);
a headlight;
a left front wheel (20L) arranged leftward relative to the head pipe (12) in a vehicle body left-right direction;
a right front wheel (20R) arranged rightward relative to the head pipe (12) in the vehicle body left-right direction;
a steering shaft (31) rotatably supported on the head pipe (12);
a link mechanism (49) that links together the vehicle body frame (10), the left front wheel (20L), and the right front wheel (20R) so that the vehicle body frame (10), the left front wheel (20L), and the right front wheel (20R) can be tilted relative to a ground on which the lean vehicle is placed, and also links together the steering shaft (31), the left front wheel (20L), and the right front wheel (20R) so that the left front wheel (20L) and the right front wheel (20R) can rotate left and right together with the steering shaft (31) in the vehicle body left-right direction; and
a vehicle part (50), wherein:
the link mechanism (49) includes an upper arm (41), a lower arm (42), and a tie rod (67) that extend leftward and rightward in the vehicle body left-right direction and are supported on the vehicle body frame (10) so that the upper arm (41), the lower arm (42), and the tie rod (67) can rotate about a first axis (C1), a second axis (C2), and a third axis (C3), respectively, extending in a vehicle body front-rear direction;
the upper arm (41) is arranged forward in the vehicle body front-rear direction relative to the head pipe (12);
the lower arm (42) is arranged forward in the vehicle body front-rear direction and downward in a vehicle body up-down direction relative to the upper arm (41);
the tie rod (67) is arranged forward in the vehicle body front-rear direction and downward in the vehicle body up-down direction relative to the lower arm (42);
the upper arm (41) can rotate between a first left-tilted position extending upward in the vehicle body up-down direction and leftward in the vehicle body left-right direction and a first right-tilted position extending upward in the vehicle body up-down direction and rightward in the vehicle body left-right direction;
the lower arm (42) can rotate between a second left-tilted position extending upward in the vehicle body up-down direction and leftward in the vehicle body left-right direction and a second right-tilted position extending upward in the vehicle body up-down direction and rightward in the vehicle body left-right direction;
the tie rod (67) can rotate between a third left-tilted position extending upward in the vehicle body up-down direction and leftward in the vehicle body left-right direction and
a third right-tilted position extending upward in the vehicle body up-down direction and rightward in the vehicle body left-right direction; and
where a first distance (A1) refers to a distance, from the first axis (C1), of one of a left end and a right end of the upper arm (41) in the vehicle body left-right direction that is farther away from the first axis (C1),
at least a portion of the vehicle part (50) is arranged:
rearward relative to a front end of the tie rod (67) in the vehicle body front-rear direction;
forward relative to a rear end of the upper arm (41) in the vehicle body front-rear direction;
rightward relative to a leftmost left end, from among a left end of the upper arm (41) in the vehicle body left-right direction when the upper arm (41) is in the first left-tilted position, a left end of the lower arm (42) in the vehicle body left-right direction when the lower arm (42) is in the second left-tilted position, and a left end of the tie rod (67) in the vehicle body left-right direction when the tie rod (67) is in the third left-tilted position;
leftward relative to a rightmost right end, from among a right end of the upper arm (41) in the vehicle body left-right direction when the upper arm (41) is in the first right-tilted position, a right end of the lower arm (42) in the vehicle body left-right direction when the lower arm (42) is in the second right-tilted position, and a right end of the tie rod (67) in the vehicle body left-right direction when the tie rod (67) is in the third right-tilted position;
upward in the vehicle body up-down direction relative to the third axis (C3);
downward in the vehicle body up-down direction relative to a position that is at the first distance (A1) upward from the first axis (C1) in the vehicle body up-down direction; and
in an area that does not contact the upper arm (41), the lower arm (42), and the tie rod (67) when the upper arm (41), the lower arm (42), and the tie rod (67) rotate, wherein
the vehicle part (50) is the electronic control unit (50A) as the controller configured to control the driving power source (4) supported on the vehicle body frame (10) or a
light control unit configured to control the headlight.

2. The lean vehicle (1) according to claim 1, wherein:
where a third distance (A3) refers to a distance, from the third axis (C3), of one of a left end and a right end of the tie rod (67) in the vehicle body left-right direction that is farther away from the third axis (C3),
at least a portion of the vehicle part (50) is arranged:
rearward relative to the front end of the tie rod (67) in the vehicle body front-rear direction;
forward relative to a front end of the lower arm (42) in the vehicle body front-rear direction; and
in an area that is inside a circle centered on the third axis (C3) and having a radius of the third distance (A3), and that is rightward in the vehicle body left-right direction and upward in the vehicle body up-down direction relative to the tie rod (67) being in the third left-tilted position and leftward in the vehicle body left-right direction and upward in the vehicle body up-down direction relative to the tie rod (67) being in the third right-tilted position, as viewed from a front side in the vehicle body front-rear direction.

3. The lean vehicle (1) according to claim 2, wherein at least a portion of the vehicle part (50) is arranged forward relative to a rear end of the tie rod (67) in the vehicle body front-rear direction.

4. The lean vehicle (1) according to any one of claims 1 to 3, wherein at least a portion of the vehicle part (50) is arranged rearward relative to a rear end of the tie rod (67) in the vehicle body front-rear direction and forward relative to a front end of the lower arm (42) in the vehicle body front-rear direction.

5. The lean vehicle (1) according to any one of claims 1 to 4, wherein:
where a second distance (A2) refers to a distance, from the second axis (C2), of one of a left end and a right end of the lower arm (42) in the vehicle body left-right direction that is farther away from the second axis (C2),
at least a portion of the vehicle part (50) is arranged:
rearward relative to a front end of the lower arm (42) in the vehicle body front-rear direction;
forward relative to a front end of the upper arm (41) in the vehicle body front-rear direction; and
in an area that is inside a circle centered on the second axis (C2) and having a radius of the second distance (A2), and that is rightward in the vehicle body left-right direction and upward in the vehicle body up-down direction relative to the lower arm (42) being in the second left-tilted position and leftward in the vehicle body left-right direction and upward in the vehicle body up-down direction relative to the lower arm (42) being in the second right-tilted position, as viewed from a front side in the vehicle body front-rear direction.

6. The lean vehicle (1) according to claim 5, wherein at least a portion of the vehicle part (50) is arranged forward relative to a rear end of the lower arm (42) in the vehicle body front-rear direction.

7. The lean vehicle (1) according to any one of claims 1 to 6, wherein at least a portion of the vehicle part (50) is arranged rearward relative to a rear end of the lower arm (42) in the vehicle body front-rear direction and forward relative to a front end of the upper arm (41) in the vehicle body front-rear direction.

8. The lean vehicle (1) according to any one of claims 1 to 7, wherein:
at least a portion of the vehicle part (50) is arranged:
rearward relative to a front end of the upper arm (41) in the vehicle body front-rear direction;
forward relative to a rear end of the upper arm (41) in the vehicle body front-rear direction; and
in an area that is inside a circle centered on the first axis (C1) and having a radius of the first distance (A1), and that is rightward in the vehicle body left-right direction and upward in the vehicle body up-down direction relative to the upper arm (41) being in the first left-tilted position and leftward in the vehicle body left-right direction and upward in the vehicle body up-down direction relative to the upper arm (41) being in the first right-tilted position, as viewed from a front side in the vehicle body front-rear direction.

9. The lean vehicle (1) according to any one of claims 1 to 8, comprising:
a brake hose (36) supported on the tie rod (67) via a bracket (35), wherein:
at least a portion of the vehicle part (50) is arranged:
rearward relative to the front end of the tie rod (67) in the vehicle body front-rear direction;
forward relative to the rear end of the lower arm (42) in the vehicle body front-rear direction; and
in an area that is rightward in the vehicle body left-right direction and upward in the vehicle body up-down direction relative to the brake hose (36) when the tie rod (67) is in the third left-tilted position and leftward in the vehicle body left-right direction and upward in the vehicle body up-down direction relative to the brake hose (36) when the tie rod (67) is in the third right-tilted position, as viewed from a front side in the vehicle body front-rear direction.

10. The lean vehicle (1) according to any one of claims 1 to 9, comprising:
a lean lock device (52) configured to lock rotation of the upper arm (41), the lower arm (42) or the tie rod (67), wherein:
at least a portion of the lean lock device (52) is arranged:
rearward relative to a front end of the lower arm (42) in the vehicle body front-rear direction;
forward relative to a rear end of the upper arm (41) in the vehicle body front-rear direction; and
rightward in the vehicle body left-right direction and upward in the vehicle body up-down direction relative to the upper arm (41) being in the first left-tilted position and leftward in the vehicle body left-right direction and upward in the vehicle body up-down direction relative to the upper arm (41) being in the first right-tilted position, as viewed from the front side in the vehicle body front-rear direction; and
the vehicle part (50) is arranged downward relative to the lean lock device (52) in the vehicle body up-down direction.

11. The lean vehicle (1) according to claim 10, comprising:
a support frame (60) that supports the lean lock device (52) on the vehicle body frame (10),
wherein the vehicle part (50) is supported on the support frame (60).

12. The lean vehicle (1) according to claim 11, wherein:
the support frame (60) includes a left frame (60L) that is arranged leftward of the lean lock device (52) in the vehicle body left-right direction and that extends downward in the vehicle body up-down direction and rightward in the vehicle body left-right direction, and a right frame (60R) that is arranged rightward of the lean lock device (52) in the vehicle body left-right direction and that extends downward in the vehicle body up-down direction and leftward in the vehicle body left-right direction; and
the vehicle part (50) is attached to a lower end portion of the left frame (60L) and a lower end portion of the right frame (60R).

## Patentansprüche

1. Ein Neigefahrzeug (1), das umfasst:
einen Fahrzeugkörperrahmen (10) mit einem Kopfrohr (12);
ein Hinterrad (28);
eine Leistungseinheit (4), die eine Antriebskraftquelle enthält, die am Fahrzeugkörperrahmen (10) gelagert ist und konfiguriert ist, um das Hinterrad (28) anzutreiben;
eine elektronische Steuereinheit (50A) als Steuerung, die konfiguriert ist, um die Antriebskraftquelle zu steuern, die auf dem Fahrzeugkörperrahmen (10) gelagert ist;
einen Scheinwerfer;
ein linkes Vorderrad (20L), das in einer Fahrzeugkörper-Links-Rechts-Richtung links vom Kopfrohr (12) angeordnet ist;
ein rechtes Vorderrad (20R), das in der Fahrzeugkörper-Links-Rechts-Richtung rechts vom Kopfrohr (12) angeordnet ist;
eine Lenkwelle (31), die drehbar am Kopfrohr (12) gelagert ist;
einen Lenkermechanismus (49), der den Fahrzeugkörperrahmen (10), das linke Vorderrad (20L) und das rechte Vorderrad (20R) miteinander verbindet, sodass der Fahrzeugkörperrahmen (10), das linke Vorderrad (20L) und das rechte Vorderrad (20R) relativ zu einem Untergrund, auf dem das Fahrzeug steht, geneigt werden können, und der zudem die Lenkwelle (31), das linke Vorderrad (20L) und das rechte Vorderrad (20R) miteinander verbindet, sodass sich das linke Vorderrad (20L) und
das rechte Vorderrad (20R) gemeinsam mit der Lenkwelle (31) in der Fahrzeugkörper-Links-Rechts-Richtung drehen können; und
ein Fahrzeugteil (50), wobei:
der Lenkermechanismus (49) einen oberen Arm (41), einen unteren Arm (42) und eine Verbindungstange (67) enthält, die sich in der Fahrzeugkörper-Links-Rechts-Richtung nach links und rechts erstrecken und am Fahrzeugkörperrahmen (10) gelagert sind, sodass der obere Arm (41), der untere Arm (42), und die Verbindungsstange (67) sich jeweils um eine erste Achse (C1), eine zweite Achse (C2) und eine dritte Achse (C3) drehen können, die sich in der Fahrzeugkörper-Vorder-Rück-Richtung erstrecken;
der obere Arm (41) in der Fahrzeugkörper-Vorder-Rück-Richtung relativ zum Kopfrohr (12) nach vorne angeordnet ist;
der untere Arm (42) in der Fahrzeugkörper-Vorder-Rück-Richtung relativ zum oberen Arm (41) nach vorne und in der Fahrzeugkörper-Auf-Ab-Richtung nach unten angeordnet ist;
die Verbindungsstange (67) in der Fahrzeugkörper-Vorder-Rück-Richtung relativ zum unteren Arm (42) nach vorne und in der Fahrzeugkörper-Auf-Ab-Richtung nach unten angeordnet ist;
der obere Arm (41) kann zwischen einer ersten nach links geneigten Position, die sich in der Fahrzeugkörper-Auf-Ab-Richtung nach oben und in der Fahrzeugkörper-Links-Rechts-Richtung nach links erstreckt, und einer ersten nach rechts geneigten Position, die sich in der Fahrzeugkörper-Auf-Ab-Richtung nach oben und in der Fahrzeugkörper-Links-Rechts-Richtung nach rechts erstreckt, drehen;
der untere Arm (42) kann zwischen einer zweiten nach links geneigten Position, die sich in der Fahrzeugkörper-Auf-Ab-Richtung nach oben und in der Fahrzeugkörper-Links-Rechts-Richtung nach links erstreckt, und einer zweiten nach rechts geneigten Position, die sich in der Fahrzeugkörper-Auf-Ab-Richtung nach oben und in der Fahrzeugkörper-Links-Rechts-Richtung nach rechts erstreckt, drehen;
die Verbindungsstange (67) kann zwischen einer dritten nach links geneigten Position, die sich in der Fahrzeugkörper-Auf-Ab-Richtung nach oben und in der Fahrzeugkörper-Links-Rechts-Richtung nach links erstreckt, und einer dritten nach rechts geneigten Position, die sich in der Fahrzeugkörper-Auf-Ab-Richtung nach oben und in der Fahrzeugkörper-Links-Rechts-Richtung nach rechts erstreckt, drehen; und wobei sich ein erster Abstand (A1) auf einen Abstand von der ersten Achse (C1) zu einem von einem linken Ende und einem rechten Ende des oberen Arms (41) in der Fahrzeugkörper-Links-Rechts-Richtung bezieht, das weiter von der ersten Achse (C1) entfernt ist,
zumindest ein Abschnitt des Fahrzeugteils (50) ist angeordnet:
rückwärts relativ zu einem vorderen Ende der Verbindungstange (67) in Fahrzeugkörper-Vorder-Rück-Richtung;
vor relativ zu einem hinteren Ende des oberen Arms (41) in Fahrzeugkörper-Vorder-Rück-Richtung;
nach rechts relativ zu einem am weitesten links liegenden linken Ende, ausgewählt aus einem linken Ende des oberen Arms (41) in der Fahrzeugkörper-Links-Rechts-Richtung, wenn sich der obere Arm (41) in der ersten nach links geneigten Position befindet, einem linken Ende des unteren Arms (42) in der Fahrzeugkörper-Links-Rechts-Richtung, wenn sich der untere Arm (42) in der zweiten nach links geneigten Position befindet, und einem linken Ende der Verbindungstange (67) in der Fahrzeugkörper-Links-Rechts-Richtung, wenn sich die Verbindungstange (67) in der dritten nach links geneigten Position befindet;
nach links relativ zu einem am weitesten rechts liegenden rechten Ende, ausgewählt aus einem rechten Ende des oberen Arms (41) in der Fahrzeugkörper-Links-Rechts-Richtung, wenn sich der obere Arm (41) in der ersten nach rechts geneigten Position befindet, einem rechten Ende des unteren Arms (42) in der Fahrzeugkörper-Links-Rechts-Richtung, wenn sich der untere Arm (42) in der zweiten nach rechts geneigten Position befindet, und einem rechten Ende der Verbindungstange (67) in der Fahrzeugkörper-Links-Rechts-Richtung, wenn sich die Verbindungstange (67) in der dritten nach rechts geneigten Position befindet;
nach oben in der Fahrzeugkörper-Auf-Ab-Richtung relativ zu der dritten Achse (C3); nach unten in der Fahrzeugkörper-Auf-Ab-Richtung relativ zu einer Position, die sich in der Fahrzeugkörper-Auf-Ab-Richtung in dem ersten Abstand (A1) nach oben von der ersten Achse (C1) befindet; und
in einem Bereich, der den oberen Arm (41), den unteren Arm (42) und die Verbindungstange (67) nicht berührt, wenn sich der obere Arm (41), der untere Arm (42) und die Verbindungstange (67) drehen, wobei
das Fahrzeugteil (50) die elektronische Steuereinheit (50A) als Steuerung ist, die die am Fahrzeugkörperrahmen (10) gelagerte Antriebskraftquelle (4) steuert, oder eine Lichtsteuereinheit, die den Scheinwerfer steuert.

2. Das Neigefahrzeug (1) gemäß Anspruch 1, wobei:
wobei sich ein dritter Abstand (A3) auf einen Abstand von der dritten Achse (C3) zu einem von einem linken Ende und einem rechten Ende der Verbindungstange (67) in der Fahrzeugkörper-Links-Rechts-Richtung bezieht, das weiter von der dritten Achse (C3) entfernt,
zumindest ein Abschnitt des Fahrzeugteils (50) angeordnet ist:
rückwärts relativ zum vorderen Ende der Verbindungstange (67) in der Fahrzeugkörper-Vorder-Rück-Richtung;
vorwärts relativ zu einem vorderen Ende des unteren Arms (42) in der Fahrzeugkörper-Vorder-Rück-Richtung; und
in einem Bereich,
der innerhalb eines Kreises, der auf der dritten Achse (C3) zentriert ist, ist, und eine Radius in dem dritten Abstand (A3) hat, und der nach recht relativ zu der Verbindungstange (67) in der Fahrzeugkörper-Links-Rechts-Richtung und nach oben in der Fahrzeugkörper-Auf-Ab-Richtung liegt, die in der dritten nach links geneigten Position und links in der Fahrzeugkörper-Links-Rechts-Richtung und oben in der Fahrzeugkörper-Auf-Ab-Richtung relativ zur Verbindungstange (67) in der dritten nach rechts geneigten Position ist, von einer Vorderseite im Fahrzeugkörper-Vorder-Rück-Richtung aus gesehen.

3. Das Neigefahrzeug (1) gemäß Anspruch 2, wobei zumindest ein Abschnitt des Fahrzeugteils (50) in der Fahrzeugkörper-Vorder-Rück-Richtung relativ zu einem hinteren Ende der Verbindungstange (67) nach vorne angeordnet ist.

4. Das Neigefahrzeug (1) gemäß irgendeinem der Ansprüche 1 bis 3, wobei zumindest ein Abschnitt des Fahrzeugteils (50) in der Fahrzeugkörper-Vorder-Rück-Richtung relativ zu einem hinteren Ende der Verbindungstange (67) nach hinten und in der Fahrzeugkörper-Vorder-Rück-Richtung relativ zu einem vorderen Ende des unteren Arms (42) nach vorne angeordnet ist.

5. Das Neigefahrzeug (1) gemäß irgendeinem der Ansprüche 1 bis 4, wobei:
wobei sich ein zweiter Abstand (A2) auf einen Abstand von der zweiten Achse (C2) zu einem von einem linken Ende und einem rechten Ende des unteren Arms (42) in der Fahrzeugkörper-Links-Rechts-Richtung bezieht, der weiter von der zweiten Achse (C2) entfernt ist,
zumindest ein Abschnitt des Fahrzeugteils (50) angeordnet ist:
rückwärts relativ zu einem vorderen Ende des unteren Arms (42) in der Fahrzeugkörper-Vor-Rück-Richtung;
vorwärts relativ zu einem vorderen Ende des oberen Arms (41) in der Fahrzeugkörper-Vorder-Rück-Richtung; und
in einem Bereich, der innerhalb eines Kreises, der auf der zweiten Achse (C2) zentriert ist, ist und einen Radius in dem zweiten Abstand (A2) hat, und der in der Fahrzeugkörper-Links-Rechts-Richtung rechts und in der Fahrzeugkörper-Auf-Ab-Richtung nach oben liegt, wenn sich der untere Arm (42) in der zweiten nach links geneigten Position befindet, und in der Fahrzeugkörper-Links-Rechts-Richtung nach links und in der Fahrzeugkörper-Auf-Ab-Richtung nach oben liegt, wenn sich der untere Arm (42) in der zweiten nach rechts geneigten Position befindet, gesehen von einer Vorderseite im Fahrzeugkörper-Vorder-Rück-Richtung.

6. Das Neigefahrzeug (1) gemäß Anspruch 5, wobei zumindest ein Abschnitt des Fahrzeugteils (50) in der Fahrzeugkörper-Vorder-Rück-Richtung relativ zu einem hinteren Ende des unteren Arms (42) nach vorne angeordnet ist.

7. Das Neigefahrzeug (1) gemäß irgendeinem der Ansprüche 1 bis 6, wobei zumindest ein Abschnitt des Fahrzeugteils (50) in der Fahrzeugkörper-Vorder-Rück-Richtung relativ zu einem hinteren Ende des unteren Arms (42) nach hinten und relativ zu einem vorderen Ende des oberen Arms (41) in der Fahrzeugkörper-Vorder-Rück-Richtung nach vorne angeordnet ist.

8. Das Neigefahrzeug (1) gemäß irgendeinem der Ansprüche 1 bis 7, wobei:
zumindest ein Abschnitt des Fahrzeugteils (50) angeordnet ist:
rückwärts relativ zu einem vorderen Ende des oberen Arms (41) in der Fahrzeugkörper-Vorder-Rück-Richtung;
vorwärts relativ zu einem hinteren Ende des oberen Arms (41) in der Fahrzeugkörper-Vorder-Rück-Richtung; und
in einem Bereich, der innerhalb eines Kreises, der auf der erste Achse (C1) zentriert ist, ist, und einen Radius in dem ersten Abstand (A1) hat, und der rechts in der Fahrzeugkörper-Links-Rechts-Richtung und oben in der Fahrzeugkörper-Auf-Ab-Richtung liegt, relativ zum oberen Arm (41), der sich in der ersten nach links geneigten Position befindet, sowie in der Fahrzeugkörper-Links-Rechts-Richtung rechts und in der Fahrzeugkörper-Auf-Ab-Richtung nach oben, relativ zum oberen Arm (41), der sich in der zweiten nach links geneigten Position befindet, gesehen von einer Vorderseite im Fahrzeugkörper-Vorder-Rück-Richtung.

9. Das Neigefahrzeug (1) gemäß irgendeinem der Ansprüche 1 bis 8, das umfasst:
einen Bremsschlauch (36), der über eine Halterung (35) an der Verbindungstange (67) gelagert ist, wobei:
zumindest ein Abschnitt des Fahrzeugteils (50) so angeordnet ist:
rückwärts relativ zu dem vorderen Ende der Verbindungstange (67) in der Fahrzeugkörper-Vorder-Rück-Richtung;
vorwärts relativ zu dem hinteren Ende des Unterarms (42) in der Fahrzeugkörper-Vorder-Rück-Richtung; und
in einem Bereich, der in der Fahrzeugkörper-Links-Rechts-Richtung rechts und in der Fahrzeugkörper-Auf-Ab-Richtung oben relativ zur Bremsleitung (36) liegt, wenn sich die Verbindungstange (67) sich in der dritten nach links geneigten Position befindet und in der Fahrzeugkörper-Links-Rechts-Richtung links und in der Fahrzeugkörper-Auf-Ab-Richtung nach oben relativ zu dem Bremsschlauch (36) angeordnet ist, wenn sich die Verbindungstange (67) in der dritten nach rechts geneigten Position befindet, gesehen von einer Vorderseite in der Fahrzeugkörper-Vorder-Rück-Richtung.

10. Das Neigefahrzeug (1) gemäß irgendeinem der Ansprüche 1 bis 9, das umfasst:
eine Neigesperrvorrichtung (52), die so konfiguriert ist, um die Drehung des oberen Arms (41), des unteren Arms (42) oder der Verbindungstange (67) zu sperren, wobei: zumindest ein Abschnitt der Neigesperrvorrichtung (52) so angeordnet ist:
rückwärts relativ zu einem vorderen Ende des Unterarms (42) in der Fahrzeugkörper-Vorder-Rück-Richtung;
vorwärts relativ zu einem hinteren Ende des oberen Arms (41) in der Fahrzeugkörper-Vorder-Rück-Richtung; und
in der Fahrzeugkörper-Links-Rechts-Richtung nach rechts und in der Fahrzeugkörper-Auf-Ab-Richtung nach oben relativ zu dem oberen Arm (41) in der ersten nach links geneigten Position und in der Fahrzeugkörper-Links-Rechts-Richtung nach links und in der Fahrzeugkörper-Auf-Ab-Richtung nach oben relativ zu dem oberen Arm (41) in der ersten nach rechts geneigten Position, gesehen von der Vorderseite in der Fahrzeugkörper-Vorder-Rück-Richtung; und
das Fahrzeugteil (50) in der Fahrzeugkörper-Auf-Ab-Richtung relativ zur Neigesperrvorrichtung (52) nach unten angeordnet ist.

11. Das Neigefahrzeug (1) gemäß Anspruch 10, das umfasst:
einen Stützrahmen (60), der die Neigungssperrvorrichtung (52) am Fahrzeugkörperrahmen (10) lagert,
wobei das Fahrzeugteil (50) auf dem Stützrahmen (60) gelagert ist.

12. Das Neigefahrzeug (1) gemäß Anspruch 11, wobei:
der Stützrahmen (60) einen linken Rahmen (60L) enthält, der in der Fahrzeugkörper-Links-Rechts-Richtung links von der Neigesperrvorrichtung (52) angeordnet ist und sich in der Fahrzeugkörper-Auf-Ab-Richtung nach unten und in der Fahrzeugkörper-Links-Rechts-Richtung nach rechts erstreckt, und einen rechten Rahmen (60R) enthält, der in der Fahrzeugkörper-Links-Rechts-Richtung rechts von der Neigesperrvorrichtung (52) angeordnet ist und sich in der Fahrzeugkörper-Auf-Ab-Richtung nach unten und in der Fahrzeugkörper-Links-Rechts-Richtung nach links erstreckt; und
das Fahrzeugteil (50) an einem unteren Abschnitt des linken Rahmens (60L) und an einem unteren Abschnitt des rechten Rahmens (60R) befestigt ist.

## Revendications

1. Véhicule inclinable (1) comprenant :
un cadre de véhicule (10) comportant un tube de tête (12) ;
une roue arrière (28) ;
un groupe moteur (4) qui inclut une source d'énergie motrice supportée par le cadre de véhicule (10) configurée pour entraîner la roue arrière (28) ;
une unité de contrôle électronique (50A) en tant que contrôleur configuré pour contrôler la source d'énergie motrice, supportée sur le cadre de véhicule (10) ;
un phare ;
une roue avant gauche (20L) agencée à gauche par rapport au tube de tête (12) en direction gauche-droite du corps de véhicule ;
une roue avant droite (20R) agencée à droite par rapport au tube de tête (12) en direction gauche-droite du corps de véhicule ;
un arbre de direction (31) supporté de manière rotative par le tube de tête (12) ;
un mécanisme de liaison (49) qui relie le cadre de véhicule (10), la roue avant gauche (20L) et la roue avant droite (20R) de sorte que le cadre de véhicule (10), la roue avant gauche (20L) et la roue avant droite (20R) puissent être inclinés par rapport au sol sur lequel le véhicule inclinable est placé, et qui relie également l'arbre de direction (31), la roue avant gauche (20L) et la roue avant droite (20R) de sorte que la roue avant gauche (20L) et la roue avant droite (20R) puissent tourner vers la gauche et vers la droite conjointement à l'arbre de direction (31) en direction gauche-droite du corps de véhicule ; et
une partie de véhicule (50), dans lequel :
le mécanisme de liaison (49) inclut un bras supérieur (41), un bras inférieur (42) et une barre de liaison (67) qui s'étendent vers la gauche et vers la droite en direction gauche-droite du corps de véhicule et sont supportés par le cadre de véhicule (10) de sorte que le bras supérieur (41), le bras inférieur (42) et la barre de liaison (67) puissent tourner respectivement autour d'un premier axe (C1), d'un deuxième axe (C2) et d'un troisième axe (C3) qui s'étendent en direction avant-arrière du corps de véhicule ;
le bras supérieur (41) est agencé vers l'avant en direction avant-arrière du corps de véhicule par rapport au tube de tête (12) ;
le bras inférieur (42) est agencé vers l'avant en direction avant-arrière du corps de véhicule et plus bas en direction haut-bas du corps de véhicule par rapport au bras supérieur (41) ;
la barre de liaison (67) est agencée vers l'avant en direction avant-arrière du corps de véhicule et plus bas en direction haut-bas du corps de véhicule par rapport au bras inférieur (42) ;
le bras supérieur (41) peut pivoter entre une première position inclinée vers la gauche qui s'étend vers le haut en direction haut-bas du corps de véhicule et vers la gauche en direction gauche-droite du corps de véhicule et une première position inclinée vers la droite qui s'étend vers le haut en direction haut-bas du corps de véhicule et vers la droite en direction gauche-droite du corps de véhicule ;
le bras inférieur (42) peut pivoter entre une deuxième position inclinée vers la gauche qui s'étend vers le haut en direction haut-bas du corps de véhicule et vers la gauche en direction gauche-droite du corps de véhicule et une deuxième position inclinée vers la droite qui s'étend vers le haut en direction haut-bas du corps de véhicule et vers la droite en direction gauche-droite du corps de véhicule ;
la barre de liaison (67) peut pivoter entre une troisième position inclinée vers la gauche qui s'étend vers le haut en direction haut-bas du corps de véhicule et vers la gauche en direction gauche-droite du corps de véhicule et une troisième position inclinée vers la droite qui s'étend vers le haut en direction haut-bas du corps de véhicule et vers la droite en direction gauche-droite du corps de véhicule ; et
où une première distance (A1) désigne une distance depuis le premier axe (C1) jusqu'à une extrémité parmi une extrémité gauche et une extrémité droite du bras supérieur (41) en direction gauche-droite du corps de véhicule qui est la plus éloignée du premier axe (C1),
au moins une portion de la partie de véhicule (50) est agencée :
vers l'arrière par rapport à une extrémité avant de la barre de liaison (67) en direction avant-arrière du corps de véhicule ;
vers l'avant par rapport à une extrémité arrière du bras supérieur (41) en direction avant-arrière du corps de véhicule ;
vers la droite par rapport à une extrémité gauche la plus à gauche, parmi une extrémité gauche du bras supérieur (41) en direction gauche-droite du corps de véhicule quand le bras supérieur (41) se trouve dans la première position inclinée vers la gauche, une extrémité gauche du bras inférieur (42) en direction gauche-droite du corps de véhicule quand le bras inférieur (42) se trouve dans la deuxième position inclinée vers la gauche, et une extrémité gauche de la barre de liaison (67) en direction gauche-droite du corps de véhicule quand la barre de liaison (67) se trouve dans la troisième position inclinée vers la gauche ;
vers la gauche par rapport à une extrémité droite la plus à droite, parmi une extrémité droite du bras supérieur (41) en direction gauche-droite du corps de véhicule quand le bras supérieur (41) se trouve dans la première position inclinée vers la droite, une extrémité droite du bras inférieur (42) en direction gauche-droite du corps de véhicule quand le bras inférieur (42) se trouve dans la deuxième position inclinée vers la droite, et une extrémité droite de la barre de liaison (67) en direction gauche-droite du corps de véhicule quand la barre de liaison (67) se trouve dans la troisième position inclinée vers la droite ;
vers le haut en direction haut-bas du corps de véhicule par rapport au troisième axe (C3) ;
vers le bas en direction haut-bas du corps de véhicule par rapport à une position située à la première distance (A1) vers le haut à partir du premier axe (C1) en direction haut-bas du corps de véhicule ; et
dans une zone qui n'est pas en contact avec le bras supérieur (41), le bras inférieur (42) et la barre de liaison (67) quand le bras supérieur (41), le bras inférieur (42) et la barre de liaison (67) pivotent, dans lequel
la partie de véhicule (50) est l'unité de contrôle électronique (50A) en tant que contrôleur configuré pour contrôler la source d'énergie motrice (4) supportée sur le cadre de véhicule (10) ou une unité de contrôle d'éclairage configurée pour contrôler le phare.

2. Véhicule inclinable (1) selon la revendication 1, dans lequel :
une troisième distance (A3) désigne une distance depuis le troisième axe (C3) jusqu'à une extrémité parmi une extrémité gauche et une extrémité droite de la barre de liaison (67) en direction gauche-droite du corps de véhicule qui est plus éloignée du troisième axe (C3),
au moins une portion de la partie de véhicule (50) est agencée :
vers l'arrière par rapport à l'extrémité avant de la barre de liaison (67) en direction avant-arrière du corps de véhicule ;
vers l'avant par rapport à une extrémité avant du bras inférieur (42) en direction avant-arrière du corps de véhicule ; et
dans une zone située à l'intérieur d'un cercle centré sur le troisième axe (C3) et ayant un rayon égal à la troisième distance (A3), et qui se trouve vers la droite en direction gauche-droite du corps de véhicule et vers le haut en direction haut-bas du corps de véhicule par rapport à la barre de liaison (67) quand il est dans la troisième position inclinée vers la gauche et vers la gauche en direction gauche-droite du corps de véhicule et vers le haut en direction haut-bas du corps de véhicule par rapport à la barre de liaison (67) quand il est dans la troisième position inclinée vers la droite, vu de face en direction avant-arrière du corps de véhicule.

3. Véhicule inclinable (1) selon la revendication 2, dans lequel au moins une portion de la partie de véhicule (50) est agencée vers l'avant par rapport à une extrémité arrière de la barre de liaison (67) en direction avant-arrière du corps de véhicule.

4. Véhicule inclinable (1) selon l'une quelconque des revendications 1 à 3, dans lequel au moins une portion de la partie de véhicule (50) est agencée vers l'arrière par rapport à une extrémité arrière de la barre de liaison (67) en direction avant-arrière du corps de véhicule et vers l'avant par rapport à une extrémité avant du bras inférieur (42) en direction avant-arrière du corps de véhicule.

5. Véhicule inclinable (1) selon l'une quelconque des revendications 1 à 4, dans lequel :
une deuxième distance (A2) désigne une distance depuis le deuxième axe (C2) jusqu'à une extrémité parmi une extrémité gauche et une extrémité droite du bras inférieur (42) en direction gauche-droite du corps de véhicule qui est plus éloignée du deuxième axe (C2),
au moins une portion de la partie de véhicule (50) est agencée :
vers l'arrière par rapport à une extrémité avant du bras inférieur (42) en direction avant-arrière du corps de véhicule ;
vers l'avant par rapport à une extrémité avant du bras supérieur (41) en direction avant-arrière du corps de véhicule ; et
dans une zone qui se trouve à l'intérieur d'un cercle centré sur le deuxième axe (C2) et ayant un rayon égal à la deuxième distance (A2), et qui se trouve vers la droite en direction gauche-droite du corps de véhicule et vers le haut en direction haut-bas du corps de véhicule par rapport au bras inférieur (42) quand il est dans la deuxième position inclinée vers la gauche, et vers la gauche en direction gauche-droite du corps de véhicule et vers le haut en direction haut-bas du corps de véhicule par rapport au bras inférieur (42) quand il est dans la deuxième position inclinée vers la droite, vu de face en direction avant-arrière du corps de véhicule.

6. Véhicule inclinable (1) selon la revendication 5, dans lequel au moins une portion de la partie de véhicule (50) est agencée vers l'avant par rapport à une extrémité arrière du bras inférieur (42) en direction avant-arrière du corps de véhicule.

7. Véhicule inclinable (1) selon l'une quelconque des revendications 1 à 6, dans lequel au moins une portion de la partie de véhicule (50) est agencée vers l'arrière par rapport à une extrémité arrière du bras inférieur (42) en direction avant-arrière du corps de véhicule, et vers l'avant par rapport à une extrémité avant du bras supérieur (41) en direction avant-arrière du corps de véhicule.

8. Véhicule inclinable (1) selon l'une quelconque des revendications 1 à 7, dans lequel :
au moins une portion de la partie de véhicule (50) est agencée :
vers l'arrière par rapport à une extrémité avant du bras supérieur (41) en direction avant-arrière du corps de véhicule ;
vers l'avant par rapport à une extrémité arrière du bras supérieur (41) en direction avant-arrière du corps de véhicule ; et
dans une zone située à l'intérieur d'un cercle centré sur le premier axe (C1) et ayant un rayon égal à la première distance (A1), et qui se trouve vers la droite en direction gauche-droite du corps de véhicule et vers le haut en direction haut-bas du corps de véhicule par rapport au bras supérieur (41) quand il est dans la première position inclinée vers la gauche,
et vers la gauche en direction gauche-droite du corps de véhicule et vers le haut en direction haut-bas du corps de véhicule par rapport au bras supérieur (41) quand il est dans la première position inclinée vers la droite, vu de face en direction avant-arrière du corps de véhicule.

9. Véhicule inclinable (1) selon l'une quelconque des revendications 1 à 8, comprenant :
un flexible de frein (36) supporté sur la barre de liaison (67) via un support (35), dans lequel :
au moins une portion de la partie de véhicule (50) est agencée :
vers l'arrière par rapport à l'extrémité avant de la barre de liaison (67) en direction avant-arrière du corps de véhicule ;
vers l'avant par rapport à l'extrémité arrière du bras inférieur (42) en direction avant-arrière du corps de véhicule ; et
dans une zone située à droite en direction gauche-droite du corps de véhicule et vers le haut en direction haut-bas du corps de véhicule par rapport au flexible de frein (36) quand la barre de liaison (67) se trouve dans la troisième position inclinée vers la gauche, et vers la gauche en direction gauche-droite du corps de véhicule et vers le haut en direction haut-bas du corps de véhicule par rapport au flexible de frein (36) quand la barre de liaison (67) se trouve dans la troisième position inclinée vers la droite, vu de face en direction avant-arrière du corps de véhicule.

10. Véhicule inclinable (1) selon l'une quelconque des revendications 1 à 9, comprenant :
un dispositif de verrouillage d'inclinaison (52) configuré pour verrouiller la rotation du bras supérieur (41), du bras inférieur (42) ou de la barre de liaison (67), dans lequel :
au moins une portion du dispositif de verrouillage d'inclinaison (52) est agencée :
vers l'arrière par rapport à une extrémité avant du bras inférieur (42) en direction avant-arrière du corps de véhicule ;
vers l'avant par rapport à une extrémité arrière du bras supérieur (41) en direction avant-arrière du corps de véhicule ; et
vers la droite en direction gauche-droite du corps de véhicule et vers le haut en direction haut-bas du corps de véhicule par rapport au bras supérieur (41) quand il est dans la première position inclinée vers la gauche, et vers la gauche en direction gauche-droite du corps de véhicule et vers le haut en direction haut-bas du corps de véhicule par rapport au bras supérieur (41) quand il est dans la première position inclinée vers la droite, vu de face en direction avant-arrière du corps de véhicule ; et
la partie de véhicule (50) est agencée plus bas que le dispositif de verrouillage d'inclinaison (52) en direction haut-bas du corps de véhicule.

11. Véhicule inclinable (1) selon la revendication 10, comprenant :
un cadre de support (60) qui supporte le dispositif de verrouillage d'inclinaison (52) sur le cadre de véhicule (10),
dans lequel la partie de véhicule (50) est supportée par le cadre de support (60).

12. Véhicule inclinable (1) selon la revendication 11, dans lequel :
le cadre de support (60) inclut un cadre gauche (60L) agencé à gauche du dispositif de verrouillage d'inclinaison (52) en direction gauche-droite du corps de véhicule et qui s'étend vers le bas en direction haut-bas du corps de véhicule et vers la droite en direction gauche-droite du corps de véhicule, et un cadre droit (60R) agencé à droite du dispositif de verrouillage d'inclinaison (52) en direction gauche-droite du corps de véhicule et qui s'étend vers le bas en direction haut-bas du corps de véhicule et vers la gauche en direction gauche-droite du corps de véhicule ; et
la partie de véhicule (50) est attachée à une portion d'extrémité inférieure du cadre gauche (60L) et à une portion d'extrémité inférieure du cadre droit (60R).
